# EUROPEAN PATENT APPLICATION

(11) **EP 4 622 149 A1**
(43) Date of publication of application: **24.09.2025**
(21) Application number: 23902298.1
(22) Date of filing: 26.10.2023
(51) Int. Cl.: H04L 1/18, H04L 1/16

(54) **DATA TRANSMISSION METHOD AND APPARATUS, AND DEVICE AND COMPUTER-READABLE STORAGE MEDIUM**

(30) Priority: 13.12.2022 CN 202211601586
(71) Applicant: Huawei Technologies Co., Ltd., Shenzhen, Guangdong 518129 (CN)
(72) Inventor: YAN, Siyu, Shenzhen, Guangdong 518129 (CN); SONG, Hexiang, Shenzhen, Guangdong 518129 (CN); LIU, Ning, Shenzhen, Guangdong 518129 (CN); WEN, Huafeng, Shenzhen, Guangdong 518129 (CN); YUAN, Hui, Shenzhen, Guangdong 518129 (CN); QU, Di, Shenzhen, Guangdong 518129 (CN)
(74) Representative: Pfenning, Meinig & Partner mbB
(86) International application number: PCT/CN2023/126915
(87) International publication number: WO 2024/125098

(57) **Abstract**

This application discloses a data transmission method, apparatus, and device, and a computer-readable storage medium, and relates to the field of communication technologies. **In** an example in which a first communication apparatus performs the method, the first communication apparatus receives a first packet; and with the first packet being an important packet that triggers timeout-based retransmission, performs a corresponding protection processing operation based on a type of the important packet, where the protection processing operation is used to successfully transmit the important packet when triggering the timeout-based retransmission is avoided. **In** the method, the important packet that triggers timeout-based retransmission is identified, and the corresponding protection processing operation is performed for the type of the important packet. Through the protection processing operation, the important packet can be successfully transmitted without triggering timeout-based retransmission. Therefore, a transmission delay of data transmission caused by triggering timeout-based retransmission can be effectively reduced, and transmission performance and stability of data transmission can be improved.

## Description

This application claims priority to Chinese Patent Application No. 202211601586.8, filed on December 13, 2022 and entitled "DATA TRANSMISSION METHOD, APPARATUS, AND DEVICE, AND COMPUTER-READABLE STORAGE MEDIUM", which is incorporated herein by reference in its entirety.

### TECHNICAL FIELD

This application relates to the field of communication technologies, and in particular, to a data transmission method, apparatus, and device, and a computer-readable storage medium.

### BACKGROUND

With development of communication technologies, a requirement for data transmission performance is increasingly high, especially a requirement for a transmission delay. In a lossy network in which a network device can directly drop a packet when network congestion occurs, a transmission delay of data transmission is mainly caused by data retransmission resulted from packet loss. Therefore, how to reduce the transmission delay caused by the packet loss is an urgent problem to be resolved.

### SUMMARY

This application provides a data transmission method, apparatus, and device, and a computer-readable storage medium, to perform packet loss protection processing on a transmitted important packet.

According to a first aspect, a data transmission method is provided. In an example in which a first communication apparatus performs the method, the first communication apparatus receiving a first packet. With the first packet being an important packet that triggers timeout-based retransmission, the first communication apparatus performs a corresponding protection processing operation based on a type of the important packet. The protection processing operation is used to successfully transmit the important packet when triggering the timeout-based retransmission is avoided.

In the method, the important packet that triggers timeout-based retransmission is identified, and the corresponding protection processing operation is performed for the type of the important packet. Through the protection processing operation, the important packet can be successfully transmitted without triggering timeout-based retransmission. Therefore, a transmission delay of data transmission caused by triggering timeout-based retransmission can be effectively reduced, and transmission performance and stability of data transmission can be improved.

In a possible implementation, a manner of the protection processing operation includes triggering out-of-order retransmission or avoiding packet loss of the important packet. Avoiding packet loss of the important packet can avoid timeout-based retransmission caused by packet loss of the important packet, so that the important packet is directly transmitted successfully without retransmission. Alternatively, after the important packet is dropped, out-of-order retransmission is actively triggered, that is, out-of-order retransmission is triggered before a time for triggering timeout-based retransmission expires, to successfully transmit the important packet through out-of-order retransmission, and then successfully transmit the important packet by avoiding triggering timeout-based retransmission. In addition, a delay of out-of-order retransmission is less than a delay of timeout-based retransmission, which effectively reduces the transmission delay.

In a possible implementation, the type of the important packet includes a retransmitted initial packet, a tail packet, an acknowledgment (acknowledgment, ACK) packet, a negative acknowledgment (negative acknowledgment, NACK) packet, or a probe packet, and the retransmitted initial packet is a 1^{st} data packet sent after retransmission is triggered.

In a possible implementation, when the type of the important packet is the retransmitted initial packet, the first communication apparatus includes a packet loss entry. The packet loss entry includes flow information of a data flow in which packet loss occurs and a sequence number of a 1^{st} packet in which packet loss occurs and that corresponds to the data flow in which packet loss occurs. A manner of identifying the retransmitted initial packet may be: when the packet loss entry includes flow information of a first data flow to which the first packet belongs, and a sequence number of a 1^{st} packet in which packet loss occurs and that corresponds to the flow information of the first data flow matches a first sequence number of the first packet, the first communication apparatus determines that the first packet is a retransmitted initial packet. In this way, the retransmitted initial packet can be identified by using the packet loss entry, and accuracy of identifying the retransmitted initial packet is improved.

In a possible implementation, after the first communication apparatus determines that the first packet is the retransmitted initial packet, the first communication apparatus may add a first identifier to the first packet. In this way, a downstream communication apparatus that receives the first packet can determine, based on the first identifier in the first packet, that the first packet is the retransmitted initial packet, and perform a corresponding protection processing operation based on the retransmitted initial packet, and the downstream communication apparatus is a communication apparatus after the first communication apparatus in a forwarding path of the first packet. Therefore, in the manner of adding the first identifier, it can be ensured, to the greatest extent, that no packet is dropped in the retransmitted initial packet, so that the downstream communication apparatus can quickly identify the retransmitted initial packet based on the first identifier.

**In** a possible implementation, after the first communication apparatus determines that the first packet is the retransmitted initial packet, the first communication apparatus may further delete, from the packet loss entry, the flow information of the first data flow and the first sequence number corresponding to the first data flow. In this way, a memory occupied by the packet loss entry can be reduced.

In a possible implementation, the first packet is the retransmitted initial packet. Before the first communication apparatus receives the retransmitted first packet, the first communication apparatus further receives a second packet. The second packet is a packet that is sent for the first time and that corresponds to the first packet, and a sequence number of the second packet is the same as the sequence number of the first packet. When a packet drop operation is performed on the second packet, based on that the second packet is the 1^{st} packet in which packet loss occurs in the first data flow, the first communication apparatus adds, to the packet loss entry, the sequence number of the second packet as the sequence number of the 1^{st} packet in which packet loss occurs and that corresponds to the first data flow. In this way, an entry can be established based on the packet drop operation.

In a possible implementation, after adding, to the packet loss entry, the sequence number of the second packet as the sequence number of the 1^{st} packet in which packet loss occurs and that corresponds to the first data flow, the first communication apparatus may send, to an upstream communication apparatus, the flow information of the first data flow and the sequence number of the 1^{st} packet in which packet loss occurs and that corresponds to the first data flow. **In** this way, the upstream communication apparatus updates a corresponding packet loss entry based on the sequence number of the 1^{st} packet in which packet loss occurs and that corresponds to the first data flow, and performs a corresponding protection processing operation based on an updated packet loss entry. The upstream communication apparatus is a communication apparatus before the first communication apparatus in the forwarding path of the first packet.

In a possible implementation, a manner of performing a corresponding protection processing operation based on a type of the important packet may be: placing the important packet into a first buffer based on that the type of the important packet is the retransmitted initial packet, and forwarding the important packet by using the first buffer. A packet loss ratio of the first buffer is less than a packet loss ratio of a second buffer, and a packet in the second buffer is an unimportant packet. In this way, using the first buffer to forward the important packet, can reduce a packet loss ratio of the important packet, thereby avoiding retransmission caused by packet loss.

In a possible implementation, when the type of the important packet is the tail packet, a manner of identifying the tail packet may be: after packet drop processing is performed on the first packet, if a packet of a first data flow to which the first packet belongs is not received within first duration, determining that the first packet is a tail packet, where the first duration is less than a retransmission timeout (retransmission timeout, RTO) needed for triggering the timeout-based retransmission; or if the first packet includes operation code and the operation code indicates that the first packet is a tail packet, determining that the first packet is the tail packet.

In a possible implementation, when the type of the important packet is the tail packet, a manner of performing a corresponding protection processing operation based on a type of the important packet may be: generating a third packet based on that the type of the important packet is the tail packet and the tail packet is not a tail packet of a reply-type packet corresponding to a remote direct memory access (remote direct memory access, RDMA) read request packet, where a sequence number of the third packet is greater than or equal to a sequence number of the first packet; and sending the third packet based on a forwarding path of the first packet. In this way, after receiving the third packet, a receiver of the first packet can return a first NACK packet to a sender of the first packet based on the third packet, and then the first NACK packet triggers the sender to retransmit the first packet. In other words, when the tail packet is dropped, out-of-order retransmission can be triggered before timeout-based retransmission is triggered.

In a possible implementation, when the type of the important packet is the tail packet, a manner of performing a corresponding protection processing operation based on a type of the important packet may be: generating a first NACK packet based on that the type of the important packet is the tail packet and the tail packet is a tail packet of a reply-type packet corresponding to an RDMA read request packet, where a sequence number of the first NACK packet is equal to a sequence number of the first packet; and sending the first NACK packet based on a forwarding path of the first packet. In this way, when receiving the first NACK packet, a receiver of the first packet can retransmit the RDMA read request packet based on the first NACK packet. In other words, when the tail packet is dropped, out-of-order retransmission can be triggered before timeout-based retransmission is triggered.

In a possible implementation, after generating the third packet or the first NACK packet, the first communication apparatus sends the third packet or the first NACK packet when a time used for generating the third packet or the first NACK packet is less than a time threshold. The time threshold may be a congestion queuing time of the first communication apparatus. Alternatively, when the sequence number of the third packet is greater than the sequence number of the first packet, the time threshold may be obtained through calculation based on a time needed for packet transmission between the third packet and the first packet. For example, the time threshold=a minimum packet length*(the sequence number of the third packet-the sequence number of the first packet)/a network bandwidth. In this way, a case in which the receiver considers the received third packet as mis-received and does not trigger out-of-order retransmission can be avoided.

In a possible implementation, when the type of the important packet is the ACK packet or the NACK packet, the first communication apparatus includes an acknowledgment entry, and the acknowledgment entry includes flow information of a data flow that is being transmitted and a maximum sequence number of a received ACK packet or NACK packet corresponding to the data flow that is being transmitted. A manner of performing a corresponding protection processing operation based on a type of the important packet may be: updating a sequence number of the first packet as the maximum sequence number into the acknowledgment entry when the type of the important packet is the ACK packet or the NACK packet; if a maximum sequence number in the acknowledgment entry is not updated again within second duration after the acknowledgment entry is updated, generating a fourth packet based on the maximum sequence number in the acknowledgment entry, where the second duration is less than an RTO needed for triggering the timeout-based retransmission; and sending the fourth packet based on a forwarding path of the first packet, where the fourth packet is used to trigger retransmission of a packet after a maximum sequence number in a first data flow.

In this way, a receiving status of the ACK packet or the NACK packet can be monitored by using the acknowledgment entry, and then retransmission of a service packet corresponding to an ACK packet that is not received can be actively triggered in time, thereby avoiding triggering timeout-based retransmission to the greatest extent, and effectively reducing a network delay.

In a possible implementation, when the first communication apparatus includes an acknowledgment entry, the first communication apparatus can further generate, through triggering and according to a received fault signal, a fourth packet based on a maximum sequence number in the acknowledgment entry; and send the fourth packet based on a forwarding path of the first packet. The fourth packet is used to trigger retransmission of a packet after a maximum sequence number in a first data flow. In this way, when a network fault occurs, out-of-order retransmission can be triggered in time by using the acknowledgment entry, and timeout-based retransmission does not need to be triggered, thereby reducing a delay caused by the network fault.

In a possible implementation, when the first packet is a transmission control protocol (transmission control protocol, TCP) packet, the fourth packet is an ACK packet, a sequence number of the fourth packet is equal to the maximum sequence number, and the fourth packet is sent at least once based on the forwarding path of the first packet; or when the first packet is an RDMA packet, the fourth packet is a NACK packet, and a sequence number of the fourth packet is equal to or greater than the maximum sequence number. In this way, out-of-order retransmission can be triggered in time by generating corresponding fourth packets under different transmission protocols.

In a possible implementation, the first communication apparatus is a switch, an end-side network interface card, or end-side software that is directly connected to a receiver of the first packet. The switch, the end-side network interface card, or the end-side software that is directly connected to the receiver of the first packet can receive a fault signal of a network, and can further directly send the fourth packet to the directly connected network interface card on the receiver, thereby improving execution efficiency.

In a possible implementation, the first packet is transmitted according to the RDMA protocol.

According to a second aspect, a data transmission apparatus is provided, and is used in a first communication apparatus. The apparatus includes:
a transceiver module, configured to perform a receiving and/or sending-related operation performed by the first communication apparatus in any one of the first aspect or the possible implementations of the first aspect; and
a processing module, configured to perform an operation other than a receiving and/or sending-related operation performed by the first communication apparatus in any one of the first aspect or the possible implementations of the first aspect.

In a possible implementation, the transceiver module includes a receiving module and/or a sending module. The receiving module is configured to perform a receiving-related operation, and the sending module is configured to perform a sending-related operation.

In a possible implementation, the transceiver module is configured to receive a first packet; and the processing module is configured to: with the first packet being an important packet that triggers timeout-based retransmission, perform a corresponding protection processing operation based on a type of the important packet. The protection processing operation is used to successfully transmit the important packet when triggering the timeout-based retransmission is avoided.

In a possible implementation, the type of the important packet includes a retransmitted initial packet, a tail packet, an ACK packet, a NACK packet, or a probe packet, and the retransmitted initial packet is a 1^{st} data packet sent after retransmission is triggered.

In a possible implementation, the type of the important packet is the retransmitted initial packet, and the first communication apparatus includes a packet loss entry. The packet loss entry includes flow information of a data flow in which packet loss occurs and a sequence number of a 1^{st} packet in which packet loss occurs and that corresponds to the data flow in which packet loss occurs.

The processing module is further configured to: when the packet loss entry includes flow information of a first data flow to which the first packet belongs, and a sequence number of a 1^{st} packet in which packet loss occurs and that corresponds to the flow information of the first data flow matches a first sequence number of the first packet, determine, by the first communication apparatus, that the first packet is a retransmitted initial packet.

In a possible implementation, the processing module is further configured to add a first identifier to the first packet. The first identifier is used by a downstream communication apparatus that receives the first packet to determine, based on the first identifier, that the first packet is the retransmitted initial packet, and perform a corresponding protection processing operation based on the retransmitted initial packet, and the downstream communication apparatus is a communication apparatus after the first communication apparatus in a forwarding path of the first packet.

In a possible implementation, the processing module is further configured to delete, from the packet loss entry, the flow information of the first data flow and the first sequence number corresponding to the first data flow.

In a possible implementation, the transceiver module is further configured to receive a second packet. The second packet is a packet that is sent for the first time and that corresponds to the first packet, and a sequence number of the second packet is the same as the sequence number of the first packet.

The processing module is further configured to: when a packet drop operation is performed on the second packet, based on that the second packet is the 1^{st} packet in which data packet loss occurs and is in the first data flow, add, to the packet loss entry, the sequence number of the second packet as the sequence number of the 1^{st} packet in which packet loss occurs and that corresponds to the first data flow.

In a possible implementation, the transceiver module is further configured to send, to an upstream communication apparatus, the flow information of the first data flow and the sequence number of the 1^{st} packet in which packet loss occurs and that corresponds to the first data flow. The sequence number of the 1^{st} packet in which packet loss occurs and that corresponds to the first data flow is used by the upstream communication apparatus to update a corresponding packet loss entry, and perform a corresponding protection processing operation based on an updated packet loss entry, and the upstream communication apparatus is a communication apparatus before the first communication apparatus in the forwarding path of the first packet.

In a possible implementation, the processing module is configured to: place the important packet into a first buffer based on that the type of the important packet is the retransmitted initial packet, and forward the important packet by using the first buffer. A packet loss ratio of the first buffer is less than a packet loss ratio of a second buffer, and a packet in the second buffer is an unimportant packet.

In a possible implementation, the type of the important packet is the tail packet, and the processing module is further configured to: after packet drop processing is performed on the first packet, if a packet of a first data flow to which the first packet belongs is not received within first duration, determine that the first packet is a tail packet, where the first duration is less than an RTO needed for triggering the timeout-based retransmission; or if the first packet includes operation code and the operation code indicates that the first packet is a tail packet, determine that the first packet is the tail packet.

In a possible implementation, the processing module is configured to: generate a third packet based on that the type of the important packet is the tail packet and the tail packet is not a tail packet of a reply-type packet corresponding to an RDMA read request packet, where a sequence number of the third packet is greater than or equal to a sequence number of the first packet; and send the third packet based on a forwarding path of the first packet, where the third packet indicates a receiver of the first packet to return a first NACK packet to a sender of the first packet based on the third packet, and the first NACK packet is used to trigger the sender to retransmit the first packet.

In a possible implementation, the processing module is configured to: generate a first NACK packet based on that the type of the important packet is the tail packet and the tail packet is a tail packet of a reply-type packet corresponding to an RDMA read request packet, where a sequence number of the first NACK packet is equal to a sequence number of the first packet; and send the first NACK packet based on a forwarding path of the first packet, where the first NACK packet indicates a receiver of the first packet to retransmit the RDMA read request packet.

In a possible implementation, the type of the important packet is the ACK packet or the NACK packet, the first communication apparatus includes an acknowledgment entry, and the acknowledgment entry includes flow information of a data flow that is being transmitted and a maximum sequence number of a received ACK packet or NACK packet corresponding to the data flow that is being transmitted.

The processing module is configured to: update a sequence number of the first packet as the maximum sequence number into the acknowledgment entry based on that the type of the important packet is the ACK packet or the NACK packet; if a maximum sequence number in the acknowledgment entry is not updated again within second duration after the acknowledgment entry is updated, generate a fourth packet based on the maximum sequence number in the acknowledgment entry, where the second duration is less than an RTO needed for triggering the timeout-based retransmission; or the NACK packet sends the fourth packet based on a forwarding path of the first packet, where the fourth packet is used to trigger retransmission of a first data flow.

In a possible implementation, the type of the important packet is the ACK packet or the NACK packet, the first communication apparatus includes an acknowledgment entry, and the acknowledgment entry includes a data flow that is being transmitted and a maximum sequence number of a received ACK packet or NACK packet corresponding to the data flow that is being transmitted.

The processing module is further configured to: if a fault signal is received, generate a fourth packet based on the maximum sequence number in the acknowledgment entry; and send the fourth packet based on a forwarding path of the first packet, where the fourth packet is used to trigger retransmission of the first data flow.

In a possible implementation, when the first packet is a TCP packet, the fourth packet is an ACK packet, a sequence number of the fourth packet is equal to the maximum sequence number, and the fourth packet is sent at least once based on the forwarding path of the first packet; or when the first packet is an RDMA packet, the fourth packet is a NACK packet, and a sequence number of the fourth packet is equal to or greater than the maximum sequence number.

In a possible implementation, the first communication apparatus is a switch, an end-side network interface card, or end-side software that is directly connected to a receiver of the first packet.

In a possible implementation, the first packet is transmitted according to the RDMA protocol.

According to a third aspect, a data transmission device is provided. The data transmission device includes a processor. The processor is coupled to a memory, the memory stores at least one program instruction or code, and the at least one program instruction or code is loaded and executed by the processor, to enable the data transmission device to implement the data transmission method according to any one of the first aspect.

Optionally, there are one or more processors, and there are one or more memories.

Optionally, the memory and the processor may be integrated together, or the memory and the processor may be separately disposed.

In a specific implementation process, the memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in this application.

According to a fourth aspect, a communication apparatus is provided. The apparatus includes a transceiver, a memory, and a processor. The transceiver, the memory, and the processor communicate with each other through an internal connection path. The memory is configured to store instructions. The processor is configured to execute the instructions stored in the memory, to control the transceiver to receive a signal, and control the transceiver to send a signal. In addition, when the processor executes the instructions stored in the memory, the communication apparatus is enabled to perform the method according to any one of the first aspect or the possible implementations of the first aspect.

According to a fifth aspect, a computer-readable storage medium is provided. The storage medium stores at least one instruction, and the instruction is loaded and executed by a processor, to enable a computer to implement the method according to any one of the first aspect or the possible implementations of the first aspect.

According to a sixth aspect, a computer program (product) is provided. The computer program (product) includes computer program code, and when the computer program code is run by a computer, the computer is enabled to perform the methods according to the foregoing aspects.

According to a seventh aspect, a chip is provided, including a processor. The processor is configured to invoke, from a memory, instructions stored in the memory and run the instructions, to enable a communication device on which the chip is installed to perform the methods according to the foregoing aspects.

According to an eighth aspect, another chip is provided, including an input interface, an output interface, a processor, and a memory. The input interface, the output interface, the processor, and the memory are connected to each other through an internal connection path. The processor is configured to execute code in the memory. When the code is executed, the processor is configured to perform the methods according to the foregoing aspects.

It should be understood that, for beneficial effects achieved by the technical solutions in the second aspect to the eighth aspect and the corresponding possible implementations in this application, refer to the foregoing technical effects in the first aspect and the corresponding possible implementations. Details are not described herein again.

### BRIEF DESCRIPTION OF DRAWINGS

FIG. 1 is a diagram of an implementation environment of a data transmission method according to an embodiment of this application;
FIG. 2 is a flowchart of a data transmission method according to an embodiment of this application;
FIG. 3 is a diagram of differentiated packet loss protection for a retransmitted initial packet according to an embodiment of this application;
FIG. 4 is a diagram of differentiated packet loss protection for a tail packet according to an embodiment of this application;
FIG. 5 is a diagram of a packet forwarding process according to an embodiment of this application;
FIG. 6 is a diagram of differentiated protection for an ACK packet or a NACK packet according to an embodiment of this application;
FIG. 7 is a diagram of another packet forwarding process according to an embodiment of this application;
FIG. 8 is a diagram of a structure of a data transmission apparatus according to an embodiment of this application;
FIG. 9 is a diagram of a structure of a network device according to an embodiment of this application; and
FIG. 10 is a diagram of a structure of another network device according to an embodiment of this application.

### DESCRIPTION OF EMBODIMENTS

To make the objectives, technical solutions, and advantages of this application clearer, the following further describes the implementations of this application in detail with reference to the accompanying drawings.

In the field of communication technologies, high performance services are quickly deployed and applied, and a main network transmission technology supporting these high performance services is an RDMA transmission technology. For example, the high performance services include services such as high performance computing (high performance computing, HPC), distributed machine learning, and distributed storage. Compared with transmission technologies such as a TCP and a user datagram protocol (user datagram protocol, UDP), the RDMA transmission technology has advantages such as a high throughput, a low delay, and low central processing unit (central processing unit, CPU) consumption.

However, the current RDMA transmission technology has a problem of packet loss sensitivity. For example, packet loss due to buffer overflow or packet loss due to a network fault may cause a significant degradation in a transmission delay. Timeout-based retransmission triggered by packet loss severely affects the transmission delay. The timeout-based retransmission means that, after sending a packet, a sender waits for an RTO time. If the sender does not receive, after waiting for the RTO time, an ACK packet or a NACK packet that corresponds to the packet and that is returned by a receiver, the sender starts to retransmit the packet. Generally, the RTO time is set to dozens of milliseconds (milliseconds, ms).

Therefore, each time timeout-based retransmission is triggered in a data flow transmission process, a transmission delay of about the RTO time is caused. Because an RTO is usually set to a large value, timeout-based retransmission significantly deteriorates a tail delay of data flow transmission. In addition, on an RDMA over converged Ethernet (RDMA over converged Ethernet, RoCE) network, if the RTO is triggered for a plurality of times, a network connection error may occur, and consequently a service interruption may be caused. Therefore, reducing a quantity of times of triggering timeout-based retransmission is a key to reducing a transmission delay and improving transmission performance.

In a tail loss probe (tail loss probe, TLP) method in a related technology, a probe timeout (probe timeout, PTO) timer is set. After a tail packet of a data flow is sent, a PTO time is waited. If a corresponding ACK packet or NACK packet is not received, a packet with a maximum sequence number in a sent packet in which the corresponding ACK packet is still not received is retransmitted, thereby avoiding timeout-based retransmission triggered by packet loss of the tail packet of the data flow. The tail packet is the last packet in a data flow. For example, a data flow sent by the sender includes six packets, and sequence numbers of the six packets are respectively 1, 2, 3, 4, 5, and 6. In this case, a packet whose sequence number is 6 in the data flow is a tail packet.

However, when the TLP method is used, if a retransmitted packet is dropped after waiting for a PTO time, timeout-based retransmission is still triggered. Therefore, the TLP method cannot completely resolve a problem of timeout-based retransmission triggered by tail packet loss. In addition, in addition to the timeout-based retransmission triggered by the tail packet, packet loss of a retransmitted initial packet is also a main factor for triggering the timeout-based retransmission. However, the TLP method cannot resolve a timeout-based retransmission problem triggered by the retransmitted initial packet.

The retransmitted initial packet means that, after packet loss occurs in a data flow and retransmission of the data flow is triggered, when a packet whose sequence number is the same as that of a 1^{st} dropped packet is retransmitted, the retransmitted packet is the retransmitted initial packet. For example, a data flow sent by the sender includes six packets, and sequence numbers of the six packets are 1, 2, 3, 4, 5, and 6. Packets whose sequence numbers are 3, 4, and 5 are dropped in a network transmission process. The sender resends the packets whose sequence numbers are 3, 4, 5, and 6. In this case, the packet whose sequence number is 3 is referred to as a retransmitted initial packet.

In addition, the PTO is usually set to a millisecond level, but is much greater than a round-trip time (round-trip time, RTT). The RTT is a time interval between sending a packet by the sender and receiving an ACK packet returned by the receiver. Generally, the RTT is dozens of to hundreds of microseconds, and sometimes the RTT is even more than milliseconds. Therefore, a transmission delay in the TLP method in the related technology is still large.

Based on this, an embodiment of this application provides a data transmission method. In the method, an important packet that triggers timeout-based retransmission is identified, and a corresponding protection processing operation is performed for the type of the important packet. Packet loss is avoided through the protection processing operation, to avoid retransmission caused by packet loss, or out-of-order retransmission is actively triggered through the protection processing operation, to avoid triggering timeout-based retransmission. A delay of out-of-order retransmission is less than a delay of timeout-based retransmission. Therefore, a transmission delay of data transmission can be effectively reduced, and transmission performance and stability of data transmission can be improved.

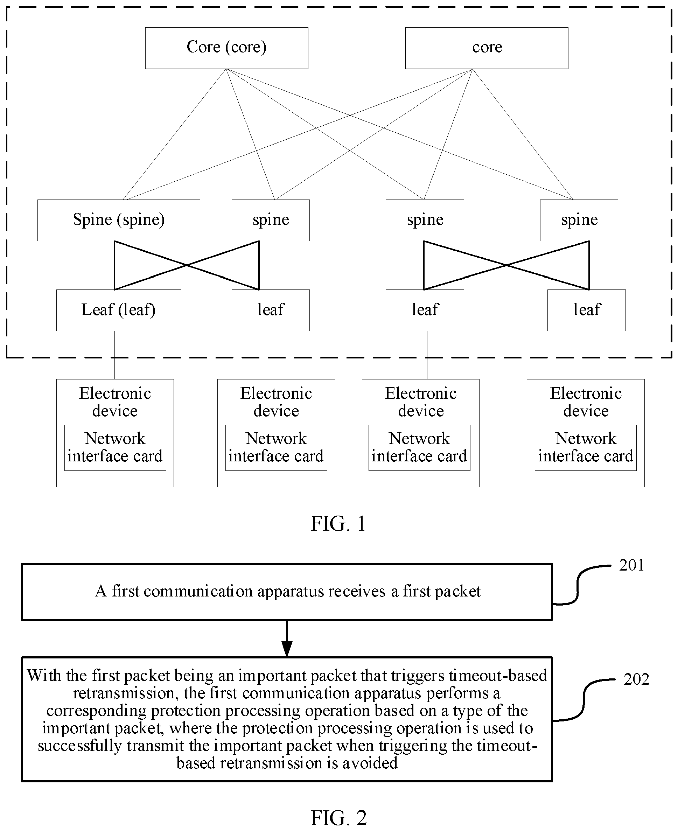

FIG. 1 is a diagram of an implementation environment of a data transmission method according to an embodiment of this application. As shown in FIG. 2, the implementation environment includes a plurality of electronic devices and a plurality of switches. The plurality of switches include a leaf (leaf) switch, a spine (spine) switch, and a core (core) switch. The electronic device may be a terminal or a server, and mainly carries high performance services having different communication requirements. A same electronic device may carry different services, and a mutual communication requirement exists between services of different electronic devices. The electronic device includes a network interface card, and the network interface card is configured to send data and receive data, to implement communication between different electronic devices. In actual deployment, quantities of electronic devices, leaf switches, spine switches, and core switches may be flexibly adjusted based on factors such as a network scale.

Optionally, the data transmission method may be applied to a data center network topology, interconnection between a plurality of data centers, or a wide area internet. A service scenario of the method may be a high performance service scenario such as distributed machine learning training, distributed storage, artificial intelligence (artificial intelligence, AI), HPC, or a container. RDMA in embodiments of this application may be Infiniband (Infiniband) or a RoCE network.

FIG. 2 is a diagram of interaction of a data transmission method according to an embodiment of this application. An example in which a first communication apparatus performs the data transmission method is used for description. The first communication apparatus may be any leaf switch, spine switch, or core switch shown in FIG. 1. To be specific, when any electronic device transmits data to another electronic device, the first communication apparatus is any intermediate forwarding node on a forwarding path between the any electronic device and the another electronic device. As shown in FIG. 2, the data transmission method includes the following step 201 and step 202.

Step 201: The first communication apparatus receives a first packet.

In this embodiment of this application, the first packet received by the first communication apparatus may be a forward-transmitted service packet, or may be a backward-transmitted ACK packet, NACK packet, or response packet. For example, a sender transmits a data flow to a receiver. The forward-transmitted service packet is a packet in the data flow sent by the sender to the receiver, and the backward-transmitted ACK packet, NACK packet, or response packet is a packet returned by the receiver to the sender after the receiver receives the data flow sent by the sender.

Step 202: With the first packet being an important packet that triggers timeout-based retransmission, the first communication apparatus performs a corresponding protection processing operation based on a type of the important packet, where the protection processing operation is used to successfully transmit the important packet when triggering the timeout-based retransmission is avoided.

In this embodiment of this application, a manner of the protection processing operation includes triggering out-of-order retransmission or avoiding packet loss of the important packet. Avoiding packet loss of the important packet can avoid timeout-based retransmission caused by packet loss of the important packet, so that the important packet is directly transmitted successfully without retransmission. Alternatively, after the important packet is dropped, out-of-order retransmission is actively triggered, that is, out-of-order retransmission is triggered before a time for triggering timeout-based retransmission expires, to successfully transmit the important packet through out-of-order retransmission, and then successfully transmit the important packet by avoiding triggering timeout-based retransmission. In addition, a delay of out-of-order retransmission is less than a delay of timeout-based retransmission, which effectively reduces the transmission delay.

Optionally, the type of the important packet includes a retransmitted initial packet, a tail packet, an ACK packet, a NACK packet, or a probe packet, and the retransmitted initial packet is a 1^{st} data packet sent after retransmission is triggered. The probe packet may include a keepalive packet, a TLP tail packet probe packet, and the like. In this embodiment of this application, three protection processing operations provided in the method are described by using an example in which the type of the important packet is the retransmitted initial packet, the tail packet, and the ACK packet or the NACK packet. Because each protection processing operation can avoid triggering out-of-order retransmission, the method can reduce a quantity of times of triggering timeout-based retransmission by a network, thereby reducing a network delay.

First, the type of the important packet is the retransmitted initial packet.

In this case, this embodiment of this application provides a manner of identifying the retransmitted initial packet, so that a corresponding protection processing operation can be performed on the retransmitted initial packet when the retransmitted initial packet is identified, to avoid packet loss of the retransmitted initial packet, and further avoid timeout-based retransmission triggered by the packet loss of the retransmitted initial packet, that is, differentiated protection is performed on packet loss of the retransmitted initial packet.

Optionally, when the first communication apparatus performs a packet drop operation, for a dropped packet, the first communication apparatus identifies whether the dropped packet is a 1^{st} packet in which packet loss occurs in a data flow to which the dropped packet belongs, and if the dropped packet is the 1^{st} packet in which packet loss occurs in the data flow to which the dropped packet belongs, flow information of the data flow to which the dropped packet belongs and a packet sequence number (packet sequence number, PSN) of the dropped packet are recorded in a packet loss entry. Different flow information indicates different data flows. Optionally, the flow information may include a 3-tuple, and the 3-tuple includes a source internet protocol (internet protocol, IP), a destination IP, and a destination queue pair (queue pair, QP).

In a possible implementation, the first communication apparatus establishes and maintains a packet loss entry. The packet loss entry includes flow information of a data flow in which packet loss occurs and a sequence number of a 1^{st} packet in which packet loss occurs and that corresponds to the data flow in which packet loss occurs. When the packet loss entry includes flow information of a first data flow to which the first packet belongs, and a sequence number of a 1^{st} packet in which packet loss occurs and that corresponds to the flow information of the first data flow matches a first sequence number of the first packet, the first communication apparatus determines that the first packet is a retransmitted initial packet. Matching the first sequence number of the first packet may mean that the sequence number of the 1^{st} packet in which packet loss occurs and that corresponds to the flow information of the first data flow is the same as the first sequence number of the first packet, or may mean that a difference between the sequence number of the 1^{st} packet in which packet loss occurs and that corresponds to the flow information of the first data flow and the first sequence number of the first packet is less than or equal to a difference threshold. A value of the difference threshold is not limited in this embodiment of this application. For example, if the difference threshold is 1, when the first sequence number is 5, sequence numbers that match the first sequence number include 4 to 6.

For example, if the first packet is the retransmitted initial packet, and the first packet received by the first communication apparatus in step 201 is the first packet retransmitted by the sender. Before the first communication apparatus receives the first packet, the first communication apparatus receives a second packet. The second packet is a packet that is sent for the first time and that corresponds to the first packet, and a sequence number of the second packet is the same as the sequence number of the first packet. When a packet drop operation is performed on the second packet, based on that the second packet is the 1^{st} packet in which packet loss occurs in the first data flow, the first communication apparatus adds, to the packet loss entry, the sequence number of the second packet as the sequence number of the 1^{st} packet in which packet loss occurs and that corresponds to the first data flow.

Optionally, after the sequence number of the second packet as the sequence number of the 1^{st} packet in which packet loss occurs and that corresponds to the first data flow is added to the packet loss entry, the flow information of the first data flow and the sequence number of the 1^{st} packet in which packet loss occurs and that corresponds to the first data flow may be further sent to an upstream communication apparatus. The sequence number of the 1^{st} packet in which packet loss occurs and that corresponds to the first data flow is used by the upstream communication apparatus to update a corresponding packet loss entry, and perform a corresponding protection processing operation based on an updated packet loss entry. The upstream communication apparatus is a communication apparatus before the first communication apparatus in a forwarding path of the first packet.

In a possible implementation, after the first communication apparatus determines that the first packet is the retransmitted initial packet, the first communication apparatus may add a first identifier to the first packet. The first identifier is used by a downstream communication apparatus that receives the first packet to determine, based on the first identifier, that the first packet is the retransmitted initial packet, and perform a corresponding protection processing operation based on the retransmitted initial packet. The downstream communication apparatus is a communication apparatus after the first communication apparatus in the forwarding path of the first packet. Therefore, a manner of adding the first identifier can ensure, to the greatest extent, that the retransmitted initial packet is not dropped.

In this embodiment of this application, because the protection processing operation is performed on the retransmitted initial packet, the retransmitted initial packet can be successfully transmitted to the receiver, and entry information corresponding to the first packet in the packet loss entry is invalid information. Therefore, after determining that the first packet is the retransmitted initial packet, the first communication apparatus may further delete, from the packet loss entry, the flow information of the first data flow and the first sequence number corresponding to the first data flow, to reduce a memory occupied by the packet loss entry. Similarly, for the downstream communication apparatus, regardless of whether the retransmitted initial packet is identified based on the packet loss entry or the retransmitted initial packet is identified based on the first identifier, after it is determined that the first packet is the retransmitted initial packet, the flow information of the first data flow and the sequence number of the 1^{st} packet in which packet loss occurs and that corresponds to the first data flow may be deleted from the packet loss entry.

In a possible implementation, after the first packet is identified as the retransmitted initial packet, the retransmitted initial packet may be placed into a first buffer, and the important packet is forwarded by using the first buffer. A packet loss ratio of the first buffer is less than a packet loss ratio of a second buffer, and a packet in the second buffer is an unimportant packet. Therefore, in a same network status, if a packet needs to be dropped due to network congestion or the like, the packet in the second buffer is preferentially dropped, to reduce a packet loss probability of the retransmitted initial packet in the first buffer, thereby implementing differentiated packet loss protection for the retransmitted initial packet.

In this embodiment of this application, when it is identified that the first packet is another type of important packet, the first packet may also be placed into the first buffer, and the important packet is forwarded by using the first buffer. For example, when the sender adds a color mark to the first packet, and the color mark indicates that the first packet is an important packet, the first communication apparatus can directly identify, based on the color mark added to the first packet, that the first packet is an important packet, to implement differentiated packet loss protection by using the first buffer. In addition to the retransmitted initial packet, the tail packet, the ACK packet, or the NACK packet, the type of the important packet may further include the keepalive packet, the TLP tail packet probe packet, and the like. For an important packet of another type, protection processing may be performed by adding an important identifier, to avoid packet loss of the important packet to the greatest extent.

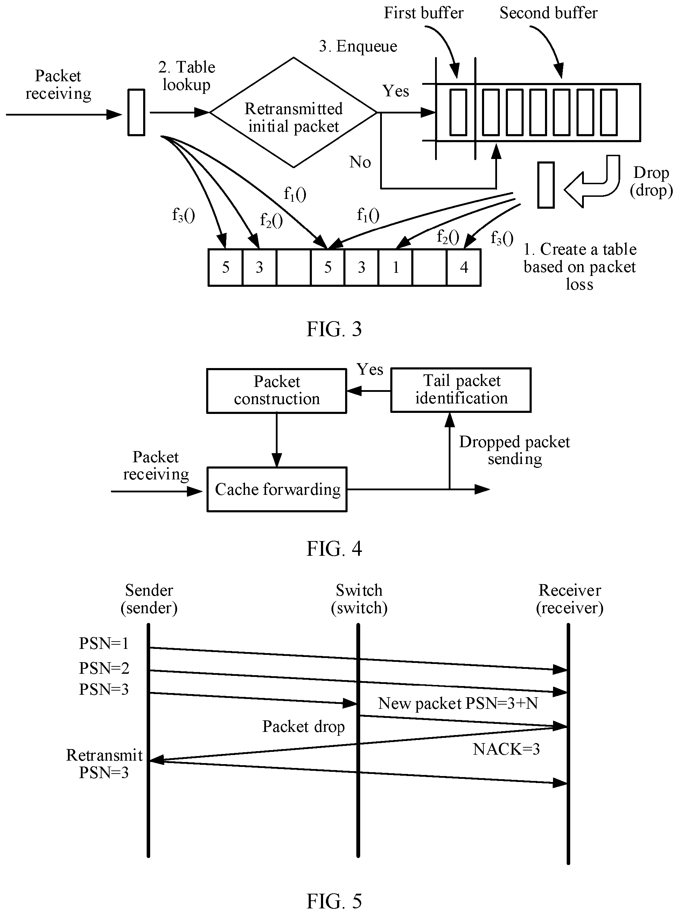

For example, FIG. 3 is a diagram of differentiated packet loss protection for a retransmitted initial packet according to an embodiment of this application. As shown in FIG. 3, a processing process of the differentiated packet loss protection for the retransmitted initial packet includes but is not limited to the following three steps. The first communication apparatus that performs the differentiated packet loss protection for the retransmitted initial packet may alternatively be a network interface card of the receiver.

Step 1: Create a table based on packet loss. In a data transmission process, the first communication apparatus places received packets into a forwarding queue for sequential forwarding. When a packet needs to be dropped due to network congestion, buffer overflow, or the like, for a dropped packet, flow information of a data flow to which the dropped packet belongs and a PSN of the dropped packet are obtained, to establish a packet loss entry and store the packet loss entry in the first communication apparatus.

Optionally, a form and a manner of the packet loss entry created by creating the table based on packet loss are not limited. For example, a correspondence between the flow information of the data flow in which packet loss occurs and a 1^{st} packet in which packet loss occurs in the data flow is stored in the packet loss entry. For another example, creating the table based on packet loss may be implemented by using a hash (hash) function. The hash function is a function that maps a key (key) value of an element in the hash table to an element storage location. That is, a key is input to the hash function, and the hash function outputs a storage location in a hash table. The output is unique, and the input and the output have a one-to-one mapping relationship. The packet loss entry shown in FIG. 3 is a hash table, where f₁(), f₂(), and f₃() represent different hash functions, and the flow information may be mapped to different storage locations in the hash table by using different hash functions. Flow information is a key value of an element in the hash table, and content in the storage location is a PSN of a 1^{st} packet in which packet loss occurs.

In this embodiment of this application, each time the first communication apparatus performs a packet drop operation, the first communication apparatus may update the packet loss entry once. For example, each time the first communication apparatus performs a packet drop operation, the first communication apparatus searches for the packet loss entry based on flow information of a data flow to which a dropped packet belongs. If the packet loss entry already includes the flow information, the packet loss entry is not updated. If the packet loss entry does not include the flow information, the flow information and a PSN of the dropped packet are added to the packet loss entry, where the PSN of the dropped packet is a 1^{st} packet in which packet loss occurs in the data flow to which the dropped packet belongs.

For example, an updating process of the hash table is described by using an example in which a form of the packet loss entry is a hash table. When the first communication apparatus performs a packet drop operation, flow information of a data flow to which a dropped packet belongs is input into the hash function as a key value. If a storage location output by the hash function already includes a PSN, no operation is performed. If the storage location output by the hash function is null, the PSN of the dropped packet is added to the storage location. A type and a quantity of used hash functions are not limited. Optionally, the type of the hash function may be a message digest (message digest, MD) 5, and the quantity of hash functions may be three shown in FIG. 3. When there are a plurality of hash functions, there are also a plurality of storage locations obtained through mapping according to the hash functions. In this way, a mapping error caused by a single hash function can be avoided, and accuracy of a packet loss entry can be improved.

Optionally, after updating the packet loss entry, the first communication apparatus may further transmit the updated packet loss entry to the upstream communication apparatus through a backward path. After receiving the updated packet loss entry, the upstream communication apparatus may synchronously update a local packet loss entry of the upstream communication apparatus. The upstream communication apparatus is a communication apparatus before the first communication apparatus in a forwarding path of the dropped packet. Therefore, when the downstream communication apparatus causes packet loss, the upstream communication apparatus can synchronously update the packet loss entry. When the retransmitted initial packet arrives at the upstream communication apparatus from the sender, the upstream communication apparatus may directly identify the retransmitted initial packet based on the packet loss entry and perform differentiated packet loss protection on the retransmitted initial packet, thereby ensuring that no packet is dropped in the retransmitted initial packet, that is, an RTO triggered by packet loss of the retransmitted initial packet is avoided.

Step 2: Look up the table. When receiving a packet, the first communication apparatus first determines, by looking up the table, whether the packet is a retransmitted initial packet, and the "looking up the table" is to look up the packet loss entry. Because the packet loss entry includes the correspondence between the flow information of the data flow in which packet loss occurs and the 1^{st} packet in which packet loss occurs in the data flow, if flow information of a data flow to which the received packet belongs hits the packet loss entry, and the PSN corresponding to the flow information in the packet loss entry is the same as a PSN of the received packet or a difference between the PSN and the PSN of the received packet is less than or equal to the difference threshold, it is determined that the received packet is a retransmitted initial packet. Alternatively, if the flow information of the data flow to which the received packet belongs does not hit the packet loss entry, or the flow information of the data flow to which the received packet belongs hits the packet loss entry but the PSN corresponding to the flow information in the packet loss entry is different from the PSN of the received packet, it is determined that the received packet is not a retransmitted initial packet.

Optionally, when it is determined that the received packet is the retransmitted initial packet, an entry corresponding to the received packet may be deleted from the packet loss entry. An important identifier may also be added to the retransmitted initial packet, for example, a color mark is made on the received packet, so that when receiving the retransmitted initial packet, the downstream communication apparatus directly determines the retransmitted initial packet based on the important identifier, thereby improving efficiency of identifying the retransmitted initial packet. In this way, the downstream communication apparatus performs differentiated packet loss protection on the retransmitted initial packet in the same manner as the first communication apparatus.

Step 3: Enqueue. The first communication apparatus places the received packet into the forwarding queue. The forwarding queue includes the first buffer and the second buffer. If the received packet is a retransmitted initial packet, the first communication apparatus places the received packet into the first buffer. If the received packet is not a retransmitted initial packet, the first communication apparatus places the received packet into the second buffer. Compared with the second buffer, the first buffer is more likely to buffer a packet, thereby preventing packet loss of the retransmitted initial packet and preventing an RTO triggered by packet loss of the retransmitted initial packet. For example, the first buffer is referred to as a reserved buffer, and the second buffer is referred to as an original buffer.

In the enqueue operation, when the received packet includes an importance identifier, and the importance identifier indicates that the received packet is an important packet and requires differentiated packet loss protection, the received packet carrying the importance identifier is placed into the first buffer, and is forwarded by using the first buffer. The important identifier may be added by the sender, or may be added by the upstream communication apparatus. For example, a network interface card of the sender identifies, based on locally recorded packet sending information, different types of important packets such as a retransmitted initial packet or a tail packet, and adds an important mark to the important packet. The first communication apparatus identifies the important mark, and places the important packet into the reserved buffer for protection to avoid packet loss, thereby avoiding an RTO triggered by packet loss of the important packet.

A manner of adding the important identifier by the network interface card of the sender may be used together with the manner of identifying and protecting the retransmitted initial packet shown in FIG. 3, to improve identification accuracy of the important packet. Alternatively, the manner of identifying and protecting the retransmitted initial packet shown in FIG. 3 may be replaced. In this case, the first communication apparatus does not need to create a packet loss entry and identify the retransmitted initial packet.

Second, the type of the important packet is the tail packet.

In this case, this embodiment of this application provides a method for actively triggering out-of-order retransmission when a dropped packet is a tail packet, so that timeout-based retransmission triggered by tail packet loss can be avoided, and a delay of out-of-order retransmission is less than a delay of timeout-based retransmission. Therefore, the network delay can be reduced, that is, differentiated protection is performed on packet loss of the tail packet.

Optionally, a manner of identifying whether the dropped packet is a tail packet includes but is not limited to the following two manners. Manner 1: After packet drop processing is performed on the first packet, if a packet of the first data flow to which the first packet belongs is not received within the first duration, it is determined that the first packet is a tail packet, and the first duration is less than an RTO needed for triggering timeout-based retransmission. The first duration T may be set based on experience or flexibly adjusted based on an application scenario. Manner 2: If the first packet includes an operation code and the operation code indicates that the first packet is a tail packet, it is determined that the first packet is the tail packet. The tail packet determined in the foregoing manner may be a true tail packet, or may be a tail packet that is incorrectly identified. Therefore, the tail packet determined in the foregoing manner may be referred to as a suspected tail packet.

After the dropped packet is identified as the tail packet, a corresponding protection processing operation may be performed. Optionally, for an RDMA read request packet in an RDMA scenario, because the RDMA read request packet is used to request a data storage location, each time the RDMA read request packet is sent, a plurality of storage locations can be requested, that is, the receiver returns a plurality of corresponding response packets, and the plurality of response packets are reply-type packets. When the tail packet is the reply-type packet corresponding to the RDMA read request packet, the performed protection processing operation may be: generating a first NACK packet, where a sequence number of the first NACK packet is equal to the sequence number of the first packet; and sending the first NACK packet based on the forwarding path of the first packet, where the first NACK packet indicates a receiver of the first packet to retransmit the RDMA read request packet.

When the tail packet is not the reply-type packet corresponding to the RDMA read request packet, the performed protection processing operation may be: generating a third packet, where a sequence number of the third packet is greater than or equal to the sequence number of the first packet; and sending the third packet based on the forwarding path of the first packet, where the third packet indicates the receiver of the first packet to return a first NACK packet to a sender of the first packet based on the third packet, and the first NACK packet is used to trigger the sender to retransmit the first packet. If the sequence number of the third packet is equal to the sequence number of the first packet, and the third packet includes a packet loss identifier, the receiver may determine, based on the packet loss identifier in the third packet, that the first packet is dropped, and trigger returning of the first NACK packet to the sender of the first packet; or if the sequence number of the third packet is greater than the sequence number of the first packet, the receiver may trigger, based on that the sequence number of the third packet is different from the sequence number of the first packet, returning of the first NACK packet to the sender of the first packet.

Therefore, in both the foregoing two manners, packet loss retransmission can be actively triggered before the RTO, that is, timeout-based retransmission is avoided. Optionally, after generating the third packet or the first NACK packet, the first communication apparatus sends the third packet or the first NACK packet when a time used for generating the third packet or the first NACK packet is less than a time threshold.

For example, the time threshold may be a congestion queuing time of the first communication apparatus. The congestion queuing time is a queuing sending time required by the first communication apparatus in a case of a maximum buffer. In this way, a case in which a subsequent packet has been sent due to an excessively long time used for generating the third packet or the first NACK packet is avoided, and in this method, retransmission does not need to be triggered by sending the third packet or the first NACK packet. Alternatively, when the sequence number of the third packet is greater than the sequence number of the first packet, the time threshold may be obtained through calculation based on a time needed for packet transmission between the third packet and the first packet. For example, the time threshold=a minimum packet length*(the sequence number of the third packet-the sequence number of the first packet)/a network bandwidth, and both the minimum packet length and the network bandwidth may be flexibly adjusted based on an application scenario. In this way, a case in which the receiver considers the received third packet as mis-received and does not trigger out-of-order retransmission can be avoided.

In this embodiment of this application, a color mark may also be added to the generated third packet or the first NACK packet, so that a communication apparatus that subsequently receives the third packet or the first NACK packet identifies, based on the color mark, that the third packet or the first NACK packet is an important packet, and performs packet loss protection processing on the third packet or the first NACK packet, to ensure that packet loss does not occur in the generated and sent third packet or first NACK packet.

For example, FIG. 4 is a diagram of differentiated packet loss protection for a tail packet according to an embodiment of this application. As shown in FIG. 4, a buffer forwarding module performs packet forwarding. If packet loss occurs, a dropped packet is sent to a tail packet identification module. The tail packet identification module determines whether the dropped packet is a tail packet. If the dropped packet is a tail packet, a packet constructing module generates a new packet based on the dropped packet, and the buffer forwarding module forwards the new packet.

The tail packet identification module is configured to identify whether a sent dropped packet is a tail packet. Optionally, a manner of identifying the tail packet may be: if a subsequent packet of a data flow to which the dropped packet belongs is not received when the first duration T after the dropped packet is dropped expires, it is determined that the dropped packet is a tail packet. Alternatively, for the RDMA scenario, because a probability that a packet whose operation code (opcode) of an RDMA packet header is a last (last) or only (only) type or the like is suspected as a tail packet is high, a manner of identifying the tail packet may be identifying the opcode of the RDMA packet header in the dropped packet. If a type of the opcode is "last "or "only", it is determined that the dropped packet is a tail packet.

In this embodiment of this application, after sending a previous RDMA read request packet, the sender does not send a next RDMA read request packet until receiving all response packets corresponding to the previous RDMA read request packet. Therefore, in the related technology, if tail packets in a plurality of response packets corresponding to an RDMA read request packet are dropped, the sender triggers timeout-based retransmission to retransmit a previous RDMA read request packet.

The packet constructing module is configured to: when a dropped packet is a tail packet, construct a new packet based on the dropped packet. For example, a PSN of a dropped packet is modified to a PSN+N, to obtain a new packet of the PSN+N, and continue to forward the new packet to the downstream communication apparatus. Optionally, on the basis of modifying the PSN of the dropped packet to the PSN+N, load information of the dropped packet may be completely or partially deleted, to obtain the new packet of the PSN+N. Because the new packet is used to trigger out-of-order retransmission, and only needs to include a sequence number of PSN+N, deleting the load information may reduce a data volume of transmitting the new packet. Herein, N may be set based on experience or flexibly adjusted based on an application scenario, and a value of N may be within a valid sequence number range of a transmission protocol. For another example, when a tail packet of a dropped packet is a tail packet of a reply-type corresponding to an RDMA read request packet, a new NACK-type packet that is the same as a PSN of the dropped packet is locally constructed and forwarded to the downstream communication apparatus. The downstream communication apparatus is a communication apparatus after the first communication apparatus in an original forwarding path of the dropped packet.

Optionally, after the new packet is constructed, the buffer forwarding module continues to perform normal forwarding. For example, an importance identifier may be added to the constructed new packet, for example, a color mark is made on the constructed new packet, so that when receiving the constructed new packet, the downstream communication apparatus determines the constructed new packet as an important packet directly based on the importance identifier, and performs packet loss protection processing on the important packet. For example, the constructed new packet is placed into the first buffer, and is forwarded by using the first buffer, to avoid packet loss of the constructed new packet.

The buffer forwarding module is configured to forward the constructed new packet to the downstream communication apparatus. For example, the buffer forwarding module performs packet loss protection processing on the new packet, for example, places the new packet into the first buffer, and forwards the new packet by using the first buffer, to avoid packet loss of the constructed new packet. Therefore, when a downstream end-side communication apparatus receives the constructed dropped packet, based on that a PSN+N corresponding to the dropped packet is different from a PSN corresponding to a packet expected to be received, it is considered that a packet with an intermediate sequence number from the PSN to the PSN+N is dropped, and a NACK packet corresponding to the PSN is returned to an end-side communication apparatus of a peer end to trigger retransmission, thereby avoiding an RTO triggered by tail packet loss.

For the new NACK-type packet constructed in the foregoing RDMA scenario, when receiving the NACK packet, the downstream end-side communication apparatus triggers retransmission of an RDMA read request packet corresponding to the NACK packet, thereby avoiding an RTO triggered by tail packet loss in the same way.

For example, refer to a diagram of a packet forwarding process shown in FIG. 5. A sender (sender) sends a data flow to a receiver (receiver) by using a switch (switch). The switch shown in FIG. 5 is the first communication apparatus in this embodiment of this application. In an RDMA scenario, the data flow includes three packets whose PSN is 1, PSN is 2, and PSN is 3, where the packet whose PSN is 3 is a tail packet. After packet loss of the packet whose PSN is 3 occurs in the switch, the switch identifies that the packet whose PSN is 3 is the tail packet, constructs a new packet whose PSN is 3+N, and continues to send the new packet whose PSN is 3+N to the receiver. After receiving the packets whose PSN is 1 and PSN is 2, the receiver receives a new packet whose PSN is 3+N constructed by the switch because the packet whose PSN is 3 has been dropped. However, the receiver expects to receive the packet whose PSN is 3. Based on that the PSNs of the new packet whose PSN is 3+N actually received and the packet whose PSN is 3 expected to be received are different, the receiver sends a packet whose NACK is 3 to the sender, where a sequence number of the packet whose NACK is 3 is the same as the sequence number 3 of the packet expected to be received. In this way, the sender can trigger retransmission of the packet whose PSN is 3 after receiving the packet whose NACK is 3.

In the packet forwarding process shown in FIG. 5, after the tail packet is dropped, retransmission of the tail packet is quickly triggered by constructing a new packet, and a caused delay is approximately an RTT time. Compared with a manner of triggering retransmission after an RTO time after the tail packet is dropped, because the RTT is less than the RTO, a delay caused by tail packet loss is effectively reduced.

Third, the type of the important packet is the ACK packet or the NACK packet.

In this case, this embodiment of this application provides a method for monitoring the ACK packet or the NACK packet. Receiving the ACK packet indicates that a service packet corresponding to the ACK packet is not dropped and does not need to be retransmitted, and receiving the NACK packet indicates that a service packet corresponding to the NACK packet is dropped and needs to be retransmitted. Therefore, a receiving status of the ACK packet or the NACK packet is monitored, so that retransmission of a dropped packet can be actively triggered in time, thereby avoiding triggering timeout-based retransmission, that is, differentiated protection is performed on the ACK packet or the NACK packet.

Optionally, the first communication apparatus establishes and maintains an acknowledgment entry, and the acknowledgment entry includes flow information of a data flow that is being transmitted and a maximum sequence number of a received ACK packet or NACK packet that corresponds to the data flow that is being transmitted, that is, a maximum PSN. The flow information may be a 5-tuple, and the 5-tuple includes a source IP, a destination IP, a protocol number, a source port number, and a destination port number. When it is identified that the first packet is an ACK packet or a NACK packet, the sequence number of the first packet as the maximum sequence number is updated into the acknowledgment entry. If a maximum sequence number in the acknowledgment entry is not updated again within second duration after the acknowledgment entry is updated, a fourth packet is generated based on the maximum sequence number in the acknowledgment entry; and the fourth packet is sent based on the forwarding path of the first packet. The fourth packet is used to trigger retransmission of the first data flow. The second duration is less than the RTO needed for triggering timeout-based retransmission.

In this embodiment of this application, in addition to that the acknowledgment entry is not updated again within the second duration after the acknowledgment entry is updated, a triggering condition for generating the fourth packet may further trigger generation of the fourth packet based on a received fault signal. Optionally, when the first packet is a TCP packet, because there is no concept of a NACK packet in a TCP transmission scenario, sending ACK packets with a same sequence number for a plurality of times may play a role of the NACK packet, that is, sending the ACK packets for a plurality of times can trigger out-of-order retransmission. In this case, the fourth packet is an ACK packet, a sequence number of the fourth packet is equal to the maximum sequence number, and the fourth packet is sent at least once based on the forwarding path of the first packet. When the first packet is an RDMA packet, in an RDMA transmission scenario, out-of-order retransmission is directly triggered by using a NACK packet. In this case, the fourth packet is a NACK packet, and a sequence number of the fourth packet is equal to or greater than the maximum sequence number.

Optionally, the RDMA transmission scenario is used as an example. In a case in which the fourth packet is the NACK packet, if the maximum sequence number recorded in the acknowledgment entry is obtained based on the received NACK packet, it indicates that the NACK packet corresponding to the maximum sequence number fails to trigger retransmission, so that the sequence number of the fourth packet is equal to the maximum sequence number. This is equivalent to that the NACK packet with the maximum sequence number is sent again, and retransmission of a packet with the maximum sequence number and a packet after the maximum sequence number in the first data flow is triggered. If the maximum sequence number recorded in the acknowledgment entry is obtained based on the received ACK packet, it indicates that the packet with the maximum sequence number has been successfully sent, and the sequence number of the fourth packet should be greater than the maximum sequence number, to trigger retransmission of the packet after the maximum sequence number in the first data flow by using the fourth packet.

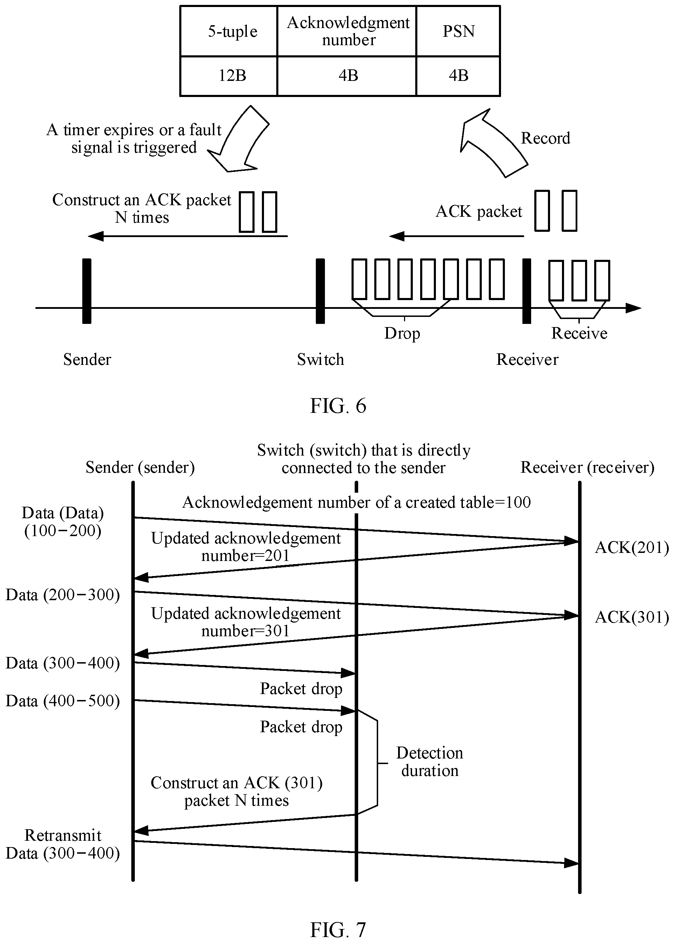

For example, FIG. 6 is a diagram of differentiated protection for an ACK packet or a NACK packet according to an embodiment of this application. As shown in FIG. 6, when a sender sends a data flow to a receiver by using a switch, the switch may perform drop procession on a transmitted packet. However, when receiving the packet, a receiver replies with a corresponding ACK packet or NACK packet. In this way, the switch can record an acknowledgment entry based on the received ACK packet or NACK packet. For example, as shown in FIG. 6, the acknowledgment entry may include a 5-tuple, an ACK acknowledgment number, and a PSN of the data flow. The 5-tuple occupies 12 bytes (Bytes, B), and the ACK acknowledgment number and the PSN each occupy 4B.

In a TCP scenario, in a table creation phase of recording the acknowledgment entry, because a TCP connection handshake packet is sent, the table may be created based on a 5-tuple of the TCP connection handshake packet, and a PSN of the TCP connection handshake packet is recorded. Each time an ACK packet or a NACK packet that is the same as the 5-tuple is received subsequently, the acknowledgment number and the PSN are updated based on the received ACK packet or NACK packet, so that the acknowledgment entry keeps the latest acknowledgment number and PSN.

In an RDMA scenario, in a table creation phase of recording the acknowledgment entry, the table may be directly created when an ACK packet or a NACK packet of a new 5-tuple is received for the first time. The acknowledgment entry may further record QP information and PSN information of the ACK packet or the NACK packet, and the like. Similarly, each time an ACK packet or a NACK packet that is the same as the 5-tuple is received subsequently, the PSN is updated based on the received ACK packet or NACK packet, so that the acknowledgment entry keeps the latest PSN.

Optionally, each time the acknowledgment entry is updated, a timer is reset once, that is, the timer starts counting down from the second duration. If a value of the timer reaches 0, that is, the timer expires, the acknowledgment number or the PSN of the acknowledgment entry is not updated again, and the latest PSN in the acknowledgment entry is not the PSN of the tail packet of the data flow, a NACK packet or an ACK packet is actively constructed to trigger fast out-of-order retransmission for the sender, to avoid triggering timeout-based retransmission because the corresponding ACK packet or NACK packet is not received for a long time.

For example, in the TCP scenario, an ACK packet needs to be constructed and sent to the sender N times, to trigger out-of-order retransmission of the sender, where N is a positive integer, and a PSN of the constructed ACK packet is equal to a PSN in a current acknowledgment entry. In the RDMA scenario, a NACK packet needs to be constructed and sent to the sender one time, to trigger out-of-order retransmission of the sender. A PSN of the constructed NACK packet is greater than the PSN in the current acknowledgment entry, and a value that the PSN of the constructed NACK packet is greater than the PSN of the current acknowledgment entry is not limited in this embodiment of this application. For example, the PSN of the constructed NACK packet is the PSN of the current acknowledgment entry plus 1.

In this embodiment of this application, in addition to the foregoing triggering, through timer expiration, actively constructing a NACK packet or an ACK packet for the sender to trigger out-of-order retransmission of the sender, when a fault signal in a network is received, actively constructing a NACK packet or an ACK packet for the sender to trigger out-of-order retransmission of the sender can be triggered. A manner of actively constructing the NACK packet or the ACK packet is the same as the foregoing description. Details are not described herein again.

When the first communication apparatus performs processing of differentiated protection on the ACK packet or the NACK packet shown in FIG. 6, the first communication apparatus may be a switch, an end-side network interface card, or end-side software that is directly connected to the receiver of the first packet. Because the first packet is a backward-transmitted response packet, the receiver of the first packet is equivalent to a forward-transmitted sender of the service packet. The method is performed by using the switch, the end-side network interface card, or the end-side software that is directly connected to the receiver of the first packet. In comparison with the method performed by the receiver of the first packet, the switch, the end-side network interface card, or the end-side software that is directly connected to the receiver of the first packet can receive a fault signal in a network. In comparison with the method performed by a switch that is not directly connected to the receiver of the first packet, the switch, the end-side network interface card, or the end-side software that is directly connected to the receiver of the first packet can directly send a constructed packet to the receiver.

For example, refer to a diagram of a packet forwarding process shown in FIG. 7. A sender (sender) sends a data flow to a receiver (receiver) by using a switch (switch). The switch that is directly connected to the sender shown in FIG. 7 is the first communication apparatus in this embodiment of this application. In a TCP scenario, the data flow includes four packets: data (Data) (100-200), Data (200-300), Data (300-400), and Data (400-500). When the Data (100-200) packet arrives at the switch, the switch acknowledges an entry based on a 5-tuple of the data flow. In this case, an acknowledgment number of the acknowledgment entry is 100. When receiving an ACK (201) packet returned by the receiver, the switch updates the acknowledgment number of the acknowledgment entry to 201. Similarly, when receiving an ACK (301) packet returned by the receiver, the switch updates the acknowledgment number of the acknowledgment entry to 301.

Each time the acknowledgment number of the acknowledgment entry is updated, the switch starts to record detection duration, and the detection duration is the second duration in this embodiment of this application. As shown in FIG. 7, if packet loss occurs in Data (300-400) and Data (400-500), after the switch updates the acknowledgment number of the acknowledgment entry to 301, the acknowledgment entry is not updated again when the detection duration expires, and 301 is not a tail packet sequence number of the data flow, the switch actively constructs the ACK (301) packet, and continuously sends the ACK (301) packet to the sender N times, to trigger the sender to retransmit Data (300-400) and Data (400-500). In this way, triggering an RTO is avoided.

In conclusion, according to the data transmission method provided in this embodiment of this application, the important packet that triggers timeout-based retransmission can be identified, and the corresponding protection processing operation is performed for the type of the important packet. Through the protection processing operation, the important packet can be successfully transmitted without triggering timeout-based retransmission. Therefore, a transmission delay of data transmission caused by triggering timeout-based retransmission can be effectively reduced, and transmission performance and stability of data transmission can be improved.

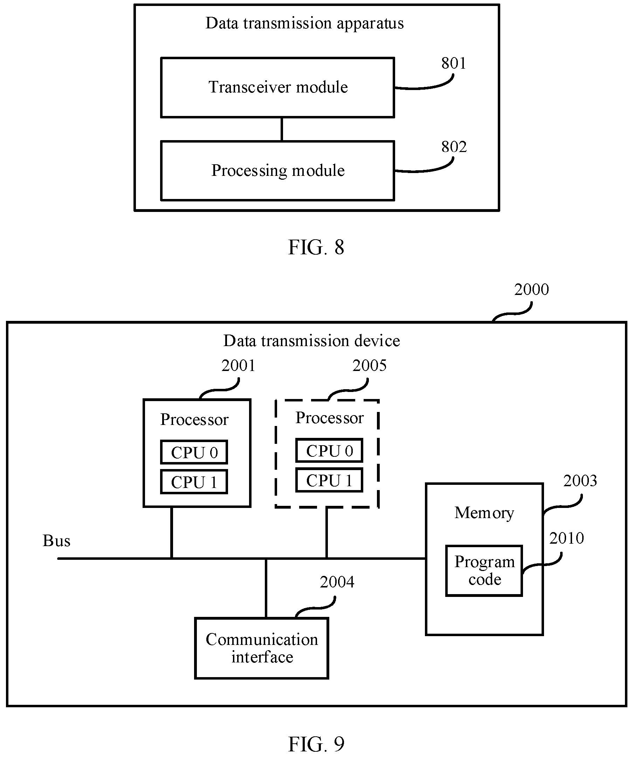

The foregoing describes the data transmission method in embodiments of this application. In correspondence to the foregoing method, an embodiment of this application further provides a data transmission apparatus. FIG. 8 is a diagram of a structure of a data transmission apparatus according to an embodiment of this application. Based on the following plurality of modules shown in FIG. 8, the data transmission apparatus shown in FIG. 8 can perform all or some operations performed by a first communication apparatus. It should be understood that the apparatus may include more additional modules than the shown modules, or a part of the shown modules are omitted. This is not limited in embodiments of this application. As shown in FIG. 8, the apparatus includes:
a transceiver module 801, configured to perform a receiving and/or sending-related operation performed by the first communication apparatus in the data transmission method shown in FIG. 2; and
a processing module 802, configured to perform an operation other than the receiving and/or sending-related operation performed by the first communication apparatus in the data transmission method shown in FIG. 2.

In a possible implementation, the transceiver module 801 includes a receiving module and/or a sending module. The receiving module is configured to perform a receiving-related operation, and the sending module is configured to perform a sending-related operation.

The transceiver module 801 is configured to receive a first packet.

The processing module 802 is configured to: with the first packet being an important packet that triggers timeout-based retransmission, perform a corresponding protection processing operation based on a type of the important packet. The protection processing operation is used to successfully transmit the important packet when triggering the timeout-based retransmission is avoided.

In a possible implementation, the type of the important packet includes a retransmitted initial packet, a tail packet, an ACK packet, a NACK packet, or a probe packet, and the retransmitted initial packet is a 1^{st} data packet sent after retransmission is triggered.

In a possible implementation, the type of the important packet is the retransmitted initial packet, and the first communication apparatus includes a packet loss entry. The packet loss entry includes flow information of a data flow in which packet loss occurs and a sequence number of a 1^{st} packet in which packet loss occurs and that corresponds to the data flow in which packet loss occurs. The processing module 802 is further configured to: when the packet loss entry includes flow information of a first data flow to which the first packet belongs, and a sequence number of a 1^{st} packet in which packet loss occurs and that corresponds to the flow information of the first data flow matches a first sequence number of the first packet, determine, by the first communication apparatus, that the first packet is a retransmitted initial packet.

In a possible implementation, the processing module 802 is further configured to add a first identifier to the first packet. The first identifier is used by a downstream communication apparatus that receives the first packet to determine, based on the first identifier, that the first packet is the retransmitted initial packet, and perform a corresponding protection processing operation based on the retransmitted initial packet, and the downstream communication apparatus is a communication apparatus after the first communication apparatus in a forwarding path of the first packet.

In a possible implementation, the processing module 802 is further configured to delete, from the packet loss entry, the flow information of the first data flow and the first sequence number corresponding to the first data flow.

In a possible implementation, the transceiver module 801 is further configured to receive a second packet. The second packet is a packet that is sent for the first time and that corresponds to the first packet, and a sequence number of the second packet is the same as the sequence number of the first packet.

The processing module 802 is further configured to: when a packet drop operation is performed on the second packet, based on that the second packet is the 1^{st} packet in which packet loss occurs in the first data flow, add, to the packet loss entry, a sequence number of the second packet as the sequence number of the 1^{st} packet in which packet loss occurs and that corresponds to the first data flow.

In a possible implementation, the transceiver module 801 is further configured to send, to an upstream communication apparatus, the flow information of the first data flow and the sequence number of the 1^{st} packet in which packet loss occurs and that corresponds to the first data flow. The sequence number of the 1^{st} packet in which packet loss occurs and that corresponds to the first data flow is used by the upstream communication apparatus to update a corresponding packet loss entry, and perform a corresponding protection processing operation based on an updated packet loss entry, and the upstream communication apparatus is a communication apparatus before the first communication apparatus in the forwarding path of the first packet.

In a possible implementation, the processing module 802 is configured to: place the important packet into a first buffer based on that the type of the important packet is the retransmitted initial packet, and forward the important packet by using the first buffer. A packet loss ratio of the first buffer is less than a packet loss ratio of a second buffer, and a packet in the second buffer is an unimportant packet.

In a possible implementation, the type of the important packet is the tail packet, and the processing module 802 is further configured to: after packet drop processing is performed on the first packet, if a packet of the first data flow to which the first packet belongs is not received within first duration, determine that the first packet is a tail packet, where the first duration is less than an RTO needed for triggering timeout-based retransmission; or if the first packet includes operation code and the operation code indicates that the first packet is a tail packet, determine that the first packet is the tail packet.

In a possible implementation, the processing module 802 is configured to: generate a third packet based on that the type of the important packet is the tail packet and the tail packet is not a tail packet of a reply-type packet corresponding to an RDMA read request packet, where a sequence number of the third packet is greater than or equal to the sequence number of the first packet; and send the third packet based on the forwarding path of the first packet, where the third packet indicates a receiver of the first packet to return a first NACK packet to a sender of the first packet based on the third packet, and the first NACK packet is used to trigger the sender to retransmit the first packet.

In a possible implementation, the processing module 802 is configured to: generate a first NACK packet based on that the type of the important packet is the tail packet and the tail packet is a tail packet of a reply-type packet corresponding to an RDMA read request packet, where a sequence number of the first NACK packet is equal to the sequence number of the first packet; and send the first NACK packet based on the forwarding path of the first packet, where the first NACK packet indicates the receiver of the first packet to retransmit the RDMA read request packet.

In a possible implementation, the type of the important packet is the ACK packet or the NACK packet, the first communication apparatus includes an acknowledgment entry, and the acknowledgment entry includes flow information of a data flow that is being transmitted and a maximum sequence number of a received ACK packet or NACK packet corresponding to the data flow that is being transmitted.

The processing module 802 is configured to: update the sequence number of the first packet as the maximum sequence number into the acknowledgment entry based on that the type of the important packet is the ACK packet or the NACK packet; if a maximum sequence number in the acknowledgment entry is not updated again within second duration after the acknowledgment entry is updated, generate a fourth packet based on the maximum sequence number in the acknowledgment entry, where the second duration is less than the RTO needed for triggering timeout-based retransmission; or the NACK packet sends the fourth packet based on the forwarding path of the first packet, where the fourth packet is used to trigger retransmission of the first data flow.

In a possible implementation, the type of the important packet is the ACK packet or the NACK packet, the first communication apparatus includes an acknowledgment entry, and the acknowledgment entry includes a data flow that is being transmitted and a maximum sequence number of a received ACK packet or NACK packet corresponding to the data flow that is being transmitted.

The processing module 802 is further configured to: if a fault signal is received, generate a fourth packet based on the maximum sequence number in the acknowledgment entry; and send the fourth packet based on the forwarding path of the first packet, where the fourth packet is used to trigger retransmission of the first data flow.

In a possible implementation, when the first packet is a TCP packet, the fourth packet is an ACK packet, a sequence number of the fourth packet is equal to the maximum sequence number, and the fourth packet is sent at least once based on the forwarding path of the first packet; or when the first packet is an RDMA packet, the fourth packet is a NACK packet, and a sequence number of the fourth packet is equal to or greater than the maximum sequence number.

In a possible implementation, the first communication apparatus is a switch, an end-side network interface card, or end-side software that is directly connected to the receiver of the first packet.

In a possible implementation, the first packet is transmitted according to the RDMA protocol.

The apparatus identifies an important packet that triggers timeout-based retransmission, and performs a corresponding protection processing operation for a type of the important packet. Through the protection processing operation, the important packet can be successfully transmitted when triggering timeout-based retransmission is avoided. Therefore, a transmission delay of data transmission caused by timeout-based retransmission can be effectively reduced, and transmission performance and stability of data transmission can be improved.

It should be understood that, when the apparatus provided in FIG. 8 implements functions of the apparatus, division into the foregoing functional modules is merely used as an example for description. In actual application, the foregoing functions may be allocated to different functional modules for implementation based on a requirement. In other words, a device is divided into different functional modules in terms of an inner structure, to implement all or some of the functions described above. In addition, the apparatus provided in the foregoing embodiment and the method embodiments pertain to a same concept. For a specific implementation process of the apparatus, refer to the method embodiments. Details are not described herein again.

FIG. 9 is a diagram of a structure of a data transmission device 2000 according to an example embodiment of this application. The data transmission device 2000 shown in FIG. 9 is configured to perform operations related to the data transmission method shown in FIG. 2. The data transmission device 2000 is, for example, a switch or a router. The data transmission device 2000 may be implemented by using a general bus system architecture.

As shown in FIG. 9, the data transmission device 2000 includes at least one processor 2001, a memory 2003, and at least one communication interface 2004.

The processor 2001 is, for example, a general-purpose central processing unit (central processing unit, CPU), a digital signal processor (digital signal processor, DSP), a network processor (network processor, NP), a graphics processing unit (Graphics Processing Unit, GPU), a neural-network processing unit (neural-network processing unit, NPU), a data processing unit (Data Processing Unit, DPU), a microprocessor, or one or more integrated circuits configured to implement the solutions of this application. For example, the processor 2001 includes an application-specific integrated circuit (application-specific integrated circuit, ASIC), a programmable logic device (programmable logic device, PLD), or another programmable logic device, a transistor logic device, a hardware component, or any combination thereof. The PLD is, for example, a complex programmable logic device (complex programmable logic device, CPLD), a field-programmable gate array (field-programmable gate array, FPGA), generic array logic (generic array logic, GAL), or any combination thereof. The processor may implement or execute various logical blocks, modules, and circuits described with reference to the content disclosed in embodiments of the present invention. Alternatively, the processor may be a combination of processors implementing a computing function, for example, a combination including one or more microprocessors, or a combination of a DSP and a microprocessor.

Optionally, the data transmission device 2000 further includes a bus. The bus is configured to transfer information between components of the data transmission device 2000. The bus may be a peripheral component interconnect (peripheral component interconnect, PCI for short) bus, an extended industry standard architecture (extended industry standard architecture, EISA for short) bus, or the like. Buses may be classified into an address bus, a data bus, a control bus, and the like. For ease of representation, only one line is for representing the bus in FIG. 9, but this does not mean that there is only one bus or only one type of bus.

The memory 2003 is, for example, a read-only memory (read-only memory, ROM) or another type of static storage device that can store static information and instructions, for another example, a random access memory (random access memory, RAM) or another type of dynamic storage device that can store information and instructions, for another example, an electrically erasable programmable read-only memory (electrically erasable programmable read-only memory, EEPROM), a compact disc read-only memory (compact disc read-only memory, CD-ROM) or other compact disc storage, optical disk storage (including compact disc, laser disc, optical disc, digital versatile disc, Blu-ray disc, and the like), a magnetic disk storage medium or another magnetic storage device, or any other medium that can be used to carry or store expected program code in a form of an instruction or a data structure and that can be accessed by a computer, but is not limited thereto. For example, the memory 2003 exists independently, and is connected to the processor 2001 through the bus. Alternatively, the memory 2003 and the processor 2001 may be integrated together.

The communication interface 2004 uses any apparatus such as a transceiver, and is configured to communicate with another device or a communication network. The communication network may be an Ethernet, a radio access network (radio access network, RAN), a wireless local area network (wireless local area network, WLAN), or the like. The communication interface 2004 may include a wired communication interface, and may further include a wireless communication interface. Specifically, the communication interface 2004 may be an Ethernet (Ethernet) interface, a fast Ethernet (Fast Ethernet, FE) interface, a gigabit Ethernet (Gigabit Ethernet, GE) interface, an asynchronous transfer mode (Asynchronous Transfer Mode, ATM) interface, a wireless local area network (wireless local area network, WLAN) interface, a cellular network communication interface, or a combination thereof. The Ethernet interface may be an optical interface, an electrical interface, or a combination thereof. In this embodiment of this application, the communication interface 2004 may be used by the data transmission device 2000 to communicate with another device.

During specific implementation, in an embodiment, the processor 2001 may include one or more CPUs, for example, a CPU 0 and a CPU 1 shown in FIG. 9. Each of the processors may be a single-core processor (single-core CPU), or may be a multi-core processor (multi-core CPU). The processor herein may be one or more devices, circuits, and/or processing cores configured to process data (for example, computer program instructions).

During specific implementation, in an embodiment, the data transmission device 2000 may include a plurality of processors, for example, the processor 2001 and a processor 2005 shown in FIG. 9. Each of the processors may be a single-core processor (single-core CPU), or may be a multi-core processor (multi-core CPU). The processor herein may be one or more devices, circuits, and/or processing cores configured to process data (for example, computer program instructions).

During specific implementation, in an embodiment, the data transmission device 2000 may further include an output device and an input device. The output device communicates with the processor 2001, and may display information in a plurality of manners. For example, the output device may be a liquid crystal display (liquid crystal display, LCD), a light emitting diode (light emitting diode, LED) display device, a cathode ray tube (cathode ray tube, CRT) display device, a projector (projector), or the like. The input device communicates with the processor 2001, and may receive an input from a user in a plurality of manners. For example, the input device may be a mouse, a keyboard, a touchscreen device, or a sensing device.

In some embodiments, the memory 2003 is configured to store program code 2010 for executing the solutions of this application, and the processor 2001 may execute the program code 2010 stored in the memory 2003. In other words, the data transmission device 2000 may implement, by using the processor 2001 and the program code 2010 in the memory 2003, the data transmission method provided in the method embodiments. The program code 2010 may include one or more software modules. Optionally, the processor 2001 may also store program code or instructions for executing the solutions of this application.

The data transmission device 2000 in this embodiment of this application may correspond to the data transmission device in the foregoing method embodiments. The processor 2001 in the data transmission device 2000 reads instructions in the memory 2003, so that the data transmission device 2000 shown in FIG. 9 can perform all or some operations performed by the first communication apparatus.

Specifically, the processor 2001 is configured to: receive a first packet; and with the first packet being an important packet that triggers timeout-based retransmission, perform a corresponding protection processing operation based on a type of the important packet. The protection processing operation is used to successfully transmit the important packet when triggering timeout-based retransmission is avoided.

For brevity, another optional implementation is not described herein again.

The data transmission device 2000 may further correspond to the data transmission apparatus shown in FIG. 8. Each functional module in the data transmission apparatus is implemented by using software of the data transmission device 2000. In other words, the functional modules included in the data transmission apparatus are generated after the processor 2001 of the data transmission device 2000 reads the program code 2010 stored in the memory 2003.

The steps of the data transmission method shown in FIG. 2 are completed by using an integrated logic circuit of hardware in the processor of the data transmission device 2000 or instructions in a form of software. The steps of the method disclosed with reference to embodiments of this application may be directly performed by a hardware processor, or may be performed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps of the foregoing methods in combination with hardware of the processor. To avoid repetition, details are not described herein again.

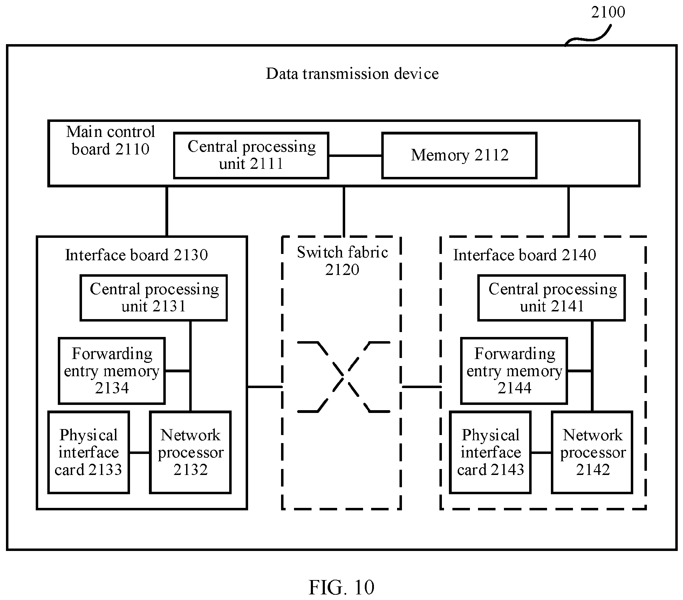

FIG. 10 is a diagram of a structure of a data transmission device 2100 according to another example embodiment of this application. The data transmission device 2100 shown in FIG. 10 is configured to perform all or some operations related to the data transmission method shown in FIG. 2. The data transmission device 2100 is, for example, a switch or a router. The data transmission device 2100 may be implemented by using a general bus system architecture.

As shown in FIG. 10, the data transmission device 2100 includes a main control board 2110 and an interface board 2130.

The main control board is also referred to as a main processing unit (main processing unit, MPU) or a route processor card (route processor card). The main control board 2110 is configured to control and manage components in the data transmission device 2100, including functions of route calculation, device management, device maintenance, and protocol processing. The main control board 2110 includes a central processing unit 2111 and a memory 2112.

The interface board 2130 is also referred to as a line interface unit (line processing unit, LPU), a line card (line card), or a service board. The interface board 2130 is configured to: provide various service interfaces and implement data packet forwarding. The service interfaces include but are not limited to an Ethernet interface, a POS (Packet over SONET/SDH) interface, and the like. The Ethernet interface is, for example, a flexible Ethernet service interface (Flexible Ethernet Clients, FlexE Clients). The interface board 2130 includes a central processing unit 2131, a network processor 2132, a forwarding entry memory 2134, and a physical interface card (physical interface card, PIC) 2133.

The central processing unit 2131 on the interface board 2130 is configured to: control and manage the interface board 2130 and communicate with the central processing unit 2111 on the main control board 2110.

The network processor 2132 is configured to implement packet forwarding processing. A form of the network processor 2132 may be a forwarding chip. The forwarding chip may be a network processor (network processor, NP). In some embodiments, the forwarding chip may be implemented by using an application-specific integrated circuit (application-specific integrated circuit, ASIC) or a field-programmable gate array (field-programmable gate array, FPGA). Specifically, the network processor 2132 is configured to forward a received packet based on a forwarding table stored in the forwarding entry memory 2134. If a destination address of the packet is an address of the data transmission device 2100, the network processor 2132 sends the packet to a CPU (for example, the central processing unit 2131) for processing. If a destination address of the packet is not an address of the data transmission device 2100, the network processor 2132 finds, from a forwarding table based on the destination address, a next hop and an egress interface that correspond to the destination address, and forwards the packet to the egress interface corresponding to the destination address. Processing an uplink packet may include: processing an ingress interface of the packet and searching a forwarding table. Processing a downlink packet may include: searching a forwarding table, and the like. In some embodiments, the central processing unit may also perform a function of the forwarding chip, for example, implement software forwarding based on a general-purpose CPU, so that the forwarding chip is not required in the interface board.

The physical interface card 2133 is configured to implement a physical layer interconnection function, so that original traffic enters the interface board 2130 from the physical interface card 2133, and a processed packet is sent out from the physical interface card 2133. The physical interface card 2133 is also referred to as a subcard and may be installed on the interface board 2130, and is responsible for converting an optoelectronic signal into a packet, performing validity check on the packet, and then forwarding the packet to the network processor 2132 for processing. In some embodiments, the central processing unit 2131 may also perform a function of the network processor 2132, for example, implement software forwarding based on a general-purpose CPU, so that the network processor 2132 is not required in the physical interface card 2133.

Optionally, the data transmission device 2100 includes a plurality of interface boards. For example, the data transmission device 2100 further includes an interface board 2140. The interface board 2140 includes a central processing unit 2141, a network processor 2142, a forwarding entry memory 2144, and a physical interface card 2143. Functions and implementations of components in the interface board 2140 are the same as or similar to those of the interface board 2130, and details are not described herein again.

Optionally, the data transmission device 2100 further includes a switch fabric 2120. The switch fabric 2120 may also be referred to as a switch fabric unit (switch fabric unit, SFU). When the data transmission device 2100 has a plurality of interface boards, the switch fabric 2120 is configured to complete data exchange between the interface boards. For example, the interface board 2130 and the interface board 2140 may communicate with each other by using the switch fabric 2120.

The main control board 2110 is coupled to the interface board. For example, the main control board 2110, the interface board 2130, the interface board 2140, and the switch fabric 2120 are connected to a system backboard through a system bus for interworking. In a possible implementation, an inter-process communication (inter-process communication, IPC) channel is established between the main control board 2110 and the interface board 2130 and between the main control board 2110 and the interface board 2140, and communication between the main control board 2110 and the interface board 2130 and between the main control board 2110 and the interface board 2140 is performed through the IPC channel.

Logically, the data transmission device 2100 includes a control plane and a forwarding plane. The control plane includes the main control board 2110 and the central processing unit 2111. The forwarding plane includes components such as the forwarding entry memory 2134, the physical interface card 2133, and the network processor 2132 that perform forwarding. The control plane performs functions such as a function of a router, a function of generating a forwarding table, a function of processing signaling and protocol packets, and a function of configuring and maintaining a state of the data transmission device. The control plane delivers the generated forwarding table to the forwarding plane. On the forwarding plane, the network processor 2132 searches, based on the forwarding table delivered by the control plane, a table for forwarding the packet received by the physical interface card 2133. The forwarding table delivered by the control plane may be stored in the forwarding entry memory 2134. In some embodiments, the control plane and the forwarding plane may be completely separated, and are not on a same data transmission device.

It should be noted that there may be one or more main control boards, and when there are a plurality of main control boards, a primary main control board and a secondary main control board may be included. There may be one or more interface boards. A stronger data processing capability of the data transmission device indicates that more interface boards are provided. There may also be one or more physical interface cards on the interface board. There may be no switch fabric or one or more switch fabrics. When there are a plurality of switch fabrics, load balancing and redundancy backup may be implemented together. In a centralized forwarding architecture, the data transmission device does not need the switch fabric, and the interface board processes service data of the entire system. In a distributed forwarding architecture, the data transmission device may have at least one switch fabric, and data exchange between a plurality of interface boards is implemented by using the switch fabric, to provide large-capacity data exchange and processing capabilities. Therefore, data access and processing capabilities of the data transmission device in the distributed architecture are greater than those of the data transmission device in the centralized architecture. Optionally, the data transmission device may alternatively be in a form in which there is only one board, that is, there is no switch fabric, and functions of the interface board and the main control board are integrated on the board. In this case, the central processing unit on the interface board and the central processing unit on the main control board may be combined into one central processing unit on the board to perform superimposed functions of the two central processing units. This form of data transmission device (for example, a data transmission device such as a low-end switch or router) has weak data exchange and processing capabilities. A specific architecture that is to be used depends on a specific networking deployment scenario. This is not limited herein.

In a specific embodiment, the data transmission device 2100 corresponds to the data transmission apparatus shown in FIG. 8. In some embodiments, the transceiver module 801 in the data transmission apparatus shown in FIG. 8 is equivalent to the physical interface card 2133 in the data transmission device 2100, and the processing module 802 is equivalent to the network processor 2132 in the data transmission device 2100.

An embodiment of this application further provides a communication apparatus. The apparatus includes a transceiver, a memory, and a processor. The transceiver, the memory, and the processor communicate with each other through an internal connection path. The memory is configured to store instructions. The processor is configured to execute the instructions stored in the memory, to control the transceiver to receive a signal and control the transceiver to send a signal. In addition, when the processor executes the instructions stored in the memory, the processor is enabled to perform a method that needs to be performed by the first communication apparatus.

An embodiment of this application further provides a data transmission device. The data transmission device includes a processor, the processor is coupled to a memory, the memory stores at least one program instruction or code, and the at least one program instruction or code is loaded and executed by the processor, to enable the data transmission device to implement the data transmission method shown in FIG. 2. Optionally, there are one or more processors, and there are one or more memories.

Optionally, the memory and the processor may be integrated together, or the memory and the processor may be separately disposed.

In a specific implementation process, the memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in this application.

It should be understood that the processor may be a CPU, or may be another general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or a transistor logic device, a discrete hardware component, or the like. The general-purpose processor may be a microprocessor or any conventional processor or the like. It should be noted that the processor may be a processor that supports an advanced reduced instruction set computing machine (advanced RISC machine, ARM) architecture.

Further, in an optional embodiment, the memory may include a read-only memory and a random access memory, and provide instructions and data for the processor. The memory may further include a nonvolatile random access memory. For example, the memory may further store information of a device type.

The memory may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external buffer. By way of example but not limitative description, a plurality of forms of RAMs may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM).

An embodiment of this application further provides a computer-readable storage medium. The storage medium stores at least one instruction, and the instruction is loaded and executed by a processor, to enable a computer to implement any one of the foregoing data transmission methods.

An embodiment of this application further provides a computer program (product). When the computer program is executed by a computer, a processor or the computer may be enabled to perform corresponding steps and/or procedures in the foregoing method embodiments.

An embodiment of this application further provides a chip, including a processor, configured to: invoke, from a memory, instructions stored in the memory and run the instructions, to enable a communication device on which the chip is installed to perform any one of the foregoing data transmission methods.

An embodiment of this application further provides another chip, including an input interface, an output interface, a processor, and a memory. The input interface, the output interface, the processor, and the memory are connected to each other through an internal connection path. The processor is configured to execute code in the memory. When the code is executed, the processor is configured to perform any one of the foregoing data transmission methods.

All or some of the foregoing embodiments may be implemented by using software, hardware, firmware, or any combination thereof. When software is used to implement embodiments, all or a part of the embodiments may be implemented in a form of a computer program product. The computer program product includes one or more computer instructions. When computer program instructions are loaded and executed on a computer, all or some of the procedures or functions according to this application are generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), a semiconductor medium (for example, a solid state disk (solid state disk)), or the like.

A person of ordinary skill in the art may be aware that, with reference to the method steps and modules described in embodiments disclosed in this specification, the method steps and modules can be implemented by using software, hardware, firmware, or any combination thereof. To clearly describe interchangeability between the hardware and the software, the steps and compositions of embodiments have been generally described in terms of functions in the foregoing descriptions. Whether the functions are performed by hardware or software depends on particular applications and design constraint conditions of the technical solutions. A person of ordinary skill in the art may use different methods to implement the described functions for each particular application, but it should not be considered that the implementation goes beyond the scope of this application.

A person of ordinary skill in the art may understand that all or some of the steps of embodiments may be implemented by hardware or a program instructing related hardware. The program may be stored in a computer-readable storage medium. The storage medium may be a read-only memory, a magnetic disk, an optical disc, or the like.

When software is used to implement embodiments, all or a part of the embodiments may be implemented in a form of a computer program product. The computer program product includes one or more computer program instructions. For example, the methods in embodiments of this application may be described in a context of machine-executable instructions. The machine-executable instructions are, for example, a program module executed in a device included in a real or virtual processor of a target. Usually, the program module includes a routine, a program, a library, an object, a class, a component, a data structure, and the like, and executes a specific task or implements a specific abstract data structure. In various embodiments, functions of the program modules may be combined or split between the described program modules. The machine-executable instructions for the program module may be executed locally or within a distributed device. In the distributed device, the program module may be located in both a local storage medium and a remote storage medium.

Computer program code used to implement the methods in embodiments of this application may be written in one or more programming languages. The computer program code may be provided for a processor of a general-purpose computer, a special-purpose computer, or another programmable data processing apparatus, so that when the program code is executed by the computer or the another programmable data processing apparatus, functions/operations specified in the flowcharts and/or block diagrams are implemented. The program code may be executed all on a computer, partially on a computer, as an independent software package, partially on a computer and partially on a remote computer, or all on a remote computer or server.

In a context of embodiments of this application, the computer program code or related data may be carried on any appropriate carrier, so that a device, an apparatus, or a processor can perform various processing and operations described above. Examples of the carrier include a signal, a computer-readable medium, and the like.

Examples of the signal may include propagating signals in electrical, optical, radio, sound, or other forms, such as carrier waves and infrared signals.

The computer-readable medium may be any tangible medium that includes or stores a program used for or related to an instruction execution system, apparatus, or device. The machine-readable medium may be a machine-readable signal medium or a machine-readable storage medium. The machine-readable medium may include but not be limited to an electronic, magnetic, optical, electromagnetic, infrared, or semiconductor system, apparatus, or device, or any suitable combination thereof. A more detailed example of the machine-readable storage medium includes an electrical connection with one or more wires, a portable computer disk, a hard disk, a random access memory (RAM), a read-only memory (ROM), an erasable programmable read-only memory (EPROM or flash memory), an optical storage device, a magnetic storage device, or any appropriate combination thereof.

It can be clearly understood by a person skilled in the art that, for the purpose of convenient and brief description, for a specific working process of the foregoing system, device, and module, refer to a corresponding process in the foregoing method embodiments. Details are not described herein again.

In the several embodiments provided in this application, it should be understood that the disclosed system, device, and method may be implemented in other manners. For example, the described device embodiment is merely an example. For example, division into the modules is merely logical function division and may be other division during actual implementation. For example, a plurality of modules or components may be combined or integrated into another system, or some features may be ignored or not performed. In addition, the displayed or discussed mutual couplings or direct couplings or communication connections may be implemented through some interfaces. Indirect couplings or communication connections between the devices or modules may be electrical connections, mechanical connections, or connections in other forms.

The modules described as separate parts may or may not be physically separate, and parts displayed as modules may or may not be physical modules, may be located in one position, or may be distributed on a plurality of network modules. Some or all of the modules may be selected based on actual requirements to achieve the objectives of the solutions in embodiments of this application.

In addition, functional modules in embodiments of this application may be integrated into one processing module, or each of the modules may exist alone physically, or two or more modules may be integrated into one module. The integrated module may be implemented in a form of hardware, or may be implemented in a form of a software functional module.

When the integrated module is implemented in a form of a software functional module and sold or used as an independent product, the integrated module may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

In this application, the terms "first", "second", and the like are used to distinguish between same or similar items whose effects and functions are basically the same. It should be understood that there is no logical or time-sequence dependency between "first", "second", and "n^{th}", and a quantity and an execution sequence are not limited. It should be further understood that although the following descriptions use terms such as "first" and "second" to describe various elements, these elements should not be limited by the terms. These terms are simply used to distinguish one element from another element. For example, without departing from the scope of the various examples, a first image may be referred to as a second image, and similarly, a second image may be referred to as a first image. Both the first image and the second image may be images, and in some cases, may be separate and different images.

It should be further understood that sequence numbers of processes do not mean execution sequences in embodiments of this application. The execution sequences of the processes should be determined based on functions and internal logic of the processes, and should not be construed as any limitation on the implementation processes of embodiments of this application.

In this application, the term "at least one" means one or more, and in this application, the term "a plurality of" means two or more. For example, a plurality of second packets mean two or more second packets. The terms "system" and "network" are often used interchangeably in this specification.

It should be understood that the terms used in the descriptions of the various examples in this specification are merely intended to describe specific examples and are not intended to impose a limitation. The terms "one" ("a" and "an") and "the" of singular forms used in the descriptions of the various examples and the appended claims are also intended to include plural forms, unless otherwise specified in the context clearly.

It should be further understood that the term "and/or" used in this specification indicates and includes any or all possible combinations of one or more of the associated listed items. The term "and/or" describes an association relationship between associated objects and indicates that three relationships may exist. For example, A and/or B may indicate the following three cases: Only A exists, both A and B exist, and only B exists. In addition, the character "/" in this application generally indicates an "or" relationship between the associated objects.

It should be further understood that when being used in this specification, the term "include" (also referred to as "includes", "including", "comprises", and/or "comprising") specifies presence of stated features, integers, steps, operations, elements, and/or components, but does not preclude presence or addition of one or more other features, integers, steps, operations, elements, components, and/or groups thereof.

It should be further understood that the term "if" may be interpreted to mean "when" ("when" or "upon") or "in response to determining" or "in response to detecting". Similarly, according to the context, the phrase "if it is determined that" or "if (a stated condition or event) is detected" may be interpreted as a meaning of "when it is determined that" or "in response to determining" or "when (a stated condition or event) is detected" or "in response to detecting (a stated condition or event)".

It should be understood that determining B based on A does not mean that B is determined based on only A, but B may alternatively be determined based on A and/or other information.

It should be further understood that "one embodiment", "an embodiment", and "a possible implementation" mentioned throughout the specification mean that a particular feature, structure, or characteristic related to the embodiment or an implementation is included in at least one embodiment of this application. Therefore, "in one embodiment" or "in an embodiment" or "a possible implementation" appearing throughout the specification may not necessarily mean a same embodiment. In addition, these particular features, structures, or characteristics may be combined in one or more embodiments in any appropriate manner.

The foregoing descriptions are merely optional embodiments of this application, but are not intended to limit this application. Any modification, equivalent replacement, or improvement made without departing from the principle of this application should fall within the protection scope of this application.

## Claims

1. A data transmission method, wherein the method is applied to a first communication apparatus, and comprises:
receiving, by the first communication apparatus, a first packet; and
with the first packet being an important packet that triggers timeout-based retransmission, performing, by the first communication apparatus, a corresponding protection processing operation based on a type of the important packet, wherein the protection processing operation is used to successfully transmit the important packet when triggering the timeout-based retransmission is avoided.

2. The method according to claim 1, wherein the type of the important packet comprises a retransmitted initial packet, a tail packet, an acknowledgment ACK packet, a negative acknowledgment NACK packet, or a probe packet, and the retransmitted initial packet is a 1^{st} data packet sent after retransmission is triggered.

3. The method according to claim 1 or 2, wherein the type of the important packet is the retransmitted initial packet, and the first communication apparatus comprises a packet loss entry, wherein the packet loss entry comprises flow information of a data flow in which packet loss occurs and a sequence number of a 1^{st} packet in which packet loss occurs and that corresponds to the data flow in which packet loss occurs; and
with the first packet being an important packet that triggers timeout-based retransmission, before the performing, by the first communication apparatus, a corresponding protection processing operation based on a type of the important packet, the method further comprises:
when the packet loss entry comprises flow information of a first data flow to which the first packet belongs, and a sequence number of a 1^{st} packet in which packet loss occurs and that corresponds to the flow information of the first data flow matches a first sequence number of the first packet, determining, by the first communication apparatus, that the first packet is a retransmitted initial packet.

4. The method according to claim 3, wherein after the determining, by the first communication apparatus, that the first packet is a retransmitted initial packet, the method further comprises:
adding, by the first communication apparatus, a first identifier to the first packet, wherein the first identifier is used by a downstream communication apparatus that receives the first packet to determine, based on the first identifier, that the first packet is the retransmitted initial packet, and perform a corresponding protection processing operation based on the retransmitted initial packet, and the downstream communication apparatus is a communication apparatus after the first communication apparatus in a forwarding path of the first packet.

5. The method according to claim 3 or 4, wherein after the determining, by the first communication apparatus, that the first packet is a retransmitted initial packet, the method further comprises:
deleting, by the first communication apparatus from the packet loss entry, the flow information of the first data flow and the first sequence number corresponding to the first data flow.

6. The method according to any one of claims 3 to 5, wherein before the receiving, by the first communication apparatus, a first packet, the method further comprises:
receiving, by the first communication apparatus, a second packet, wherein the second packet is a packet that is sent for the first time and that corresponds to the first packet, and a sequence number of the second packet is the same as the sequence number of the first packet; and
when a packet drop operation is performed on the second packet, based on that the second packet is the 1^{st} packet in which packet loss occurs in the first data flow, adding, by the first communication apparatus to the packet loss entry, the sequence number of the second packet as the sequence number of the 1^{st} packet in which packet loss occurs and that corresponds to the first data flow.

7. The method according to claim 6, wherein after the adding, to the packet loss entry, the sequence number of the second packet as the sequence number of the 1^{st} packet in which packet loss occurs and that corresponds to the first data flow, the method further comprises:
sending, to an upstream communication apparatus, the flow information of the first data flow and the sequence number of the 1^{st} packet in which packet loss occurs and that corresponds to the first data flow, wherein the sequence number of the 1^{st} packet in which packet loss occurs and that corresponds to the first data flow is used by the upstream communication apparatus to update a corresponding packet loss entry, and perform a corresponding protection processing operation based on an updated packet loss entry, and the upstream communication apparatus is a communication apparatus before the first communication apparatus in the forwarding path of the first packet.

8. The method according to any one of claims 3 to 7, wherein the performing a corresponding protection processing operation based on a type of the important packet comprises:
placing the important packet into a first buffer based on that the type of the important packet is the retransmitted initial packet, and forwarding the important packet by using the first buffer, wherein a packet loss ratio of the first buffer is less than a packet loss ratio of a second buffer, and a packet in the second buffer is an unimportant packet.

9. The method according to claim 1 or 2, wherein the type of the important packet is the tail packet, and with the first packet being an important packet, before the performing, by the first communication apparatus, a corresponding protection processing operation based on a type of the important packet, the method further comprises:
after packet drop processing is performed on the first packet, if a packet of a first data flow to which the first packet belongs is not received within first duration, determining that the first packet is a tail packet, wherein the first duration is less than a retransmission timeout RTO needed for triggering the timeout-based retransmission; or
if the first packet comprises operation code and the operation code indicates that the first packet is a tail packet, determining that the first packet is the tail packet.

10. The method according to claim 9, wherein the performing a corresponding protection processing operation based on a type of the important packet comprises:
generating a third packet based on that the type of the important packet is the tail packet and the tail packet is not a tail packet of a reply-type packet corresponding to a remote direct memory access RDMA read request packet, wherein a sequence number of the third packet is greater than or equal to a sequence number of the first packet; and
sending the third packet based on a forwarding path of the first packet, wherein the third packet indicates a receiver of the first packet to return a first NACK packet to a sender of the first packet based on the third packet, and the first NACK packet is used to trigger the sender to retransmit the first packet.

11. The method according to claim 9, wherein the performing a corresponding protection processing operation based on a type of the important packet comprises:
generating a first NACK packet based on that the type of the important packet is the tail packet and the tail packet is a tail packet of a reply-type packet corresponding to an RDMA read request packet, wherein a sequence number of the first NACK packet is equal to a sequence number of the first packet; and
sending the first NACK packet based on a forwarding path of the first packet, wherein the first NACK packet indicates a receiver of the first packet to retransmit the RDMA read request packet.

12. The method according to claim 1 or 2, wherein the type of the important packet is the ACK packet or the NACK packet, the first communication apparatus comprises an acknowledgment entry, and the acknowledgment entry comprises flow information of a data flow that is being transmitted and a maximum sequence number of a received ACK packet or NACK packet corresponding to the data flow that is being transmitted; and
the performing a corresponding protection processing operation based on a type of the important packet comprises:
updating a sequence number of the first packet as the maximum sequence number into the acknowledgment entry based on that the type of the important packet is the ACK packet or the NACK packet;
if a maximum sequence number in the acknowledgment entry is not updated again within second duration after the acknowledgment entry is updated, generating a fourth packet based on the maximum sequence number in the acknowledgment entry, wherein the second duration is less than an RTO needed for triggering the timeout-based retransmission; and
sending the fourth packet based on a forwarding path of the first packet, wherein the fourth packet is used to trigger retransmission of the first data flow.

13. The method according to claim 1 or 2, wherein the type of the important packet is the ACK packet or the NACK packet, the first communication apparatus comprises an acknowledgment entry, and the acknowledgment entry comprises a data flow that is being transmitted and a maximum sequence number of a received ACK packet or NACK packet corresponding to the data flow that is being transmitted; and
the method further comprises:
if a fault signal is received, generating a fourth packet based on the maximum sequence number in the acknowledgment entry; and
sending the fourth packet based on a forwarding path of the first packet, wherein the fourth packet is used to trigger retransmission of the first data flow.

14. The method according to claim 12 or 13, wherein when the first packet is a transmission control protocol TCP packet, the fourth packet is an ACK packet, a sequence number of the fourth packet is equal to the maximum sequence number, and the fourth packet is sent at least once based on the forwarding path of the first packet; or
when the first packet is an RDMA packet, the fourth packet is a NACK packet, and a sequence number of the fourth packet is equal to or greater than the maximum sequence number.

15. The method according to any one of claims 12 to 14, wherein the first communication apparatus is a switch, an end-side network interface card, or end-side software that is directly connected to a receiver of the first packet.

16. The method according to any one of claims 1 to 15, wherein the first packet is transmitted according to the remote direct memory access RDMA protocol.

17. A data transmission apparatus, wherein the apparatus is used in a first communication apparatus, and the apparatus comprises:
a transceiver module, configured to perform a receiving and/or sending-related operation performed by the first communication apparatus in the method according to any one of claims 1 to 16; and
a processing module, configured to perform an operation other than the receiving and/or sending-related operation performed by the first communication apparatus in the method according to any one of claims 1 to 16.

18. A data transmission device, wherein the data transmission device comprises a processor, the processor is coupled to a memory, the memory stores at least one program instruction or code, and the at least one program instruction or code is loaded and executed by the processor, to enable the data transmission device to implement the data transmission method according to any one of claims 1 to 16.

19. A computer-readable storage medium, wherein the computer storage medium stores at least one instruction, and the at least one instruction is loaded and executed by a processor, to enable a computer to implement the data transmission method according to any one of claims 1 to 16.

20. A computer program product, wherein the computer program product comprises computer program code, and the computer program code is loaded and executed by a computer, to enable the computer to implement the data transmission method according to any one of claims 1 to 16.
